**Europäisches Patentamt**

(19) **European Patent Office**

**Office européen des brevets**

(11) Numéro de publication: **0 106 714**
**B1**

(12) **FASCICULE DE BREVET EUROPEEN**

(45) Date de publication du fascicule du brevet:
**22.04.87**

(51) Int. Cl.⁴: **H 04 J 3/24,** H 04 N 7/00

(21) Numéro de dépôt: **83401655.2**

(22) Date de dépôt: **12.08.83**

(54) Structure de point d'accès à un réseau de diffusion de connées par paquets.

(30) Priorité: **31.08.82 FR 8215139**

(43) Date de publication de la demande:
**25.04.84 Bulletin 84/17**

(45) Mention de la délivrance du brevet:
**22.04.87 Bulletin 87/17**

(84) Etats contractants désignés:
**AT BE CH DE GB IT LI LU NL SE**

(56) Documents cités:
**FR - A - 2 239 833**
**US - A - 4 082 922**
**US - A - 4 115 662**

**WESCON CONFERENCE RECORD, 18-20 septembre 1979, session 28/1, pages 1-6, San Francisco, CA, US, L. SOLTESZ: "Multiprocessing with single board computers - hardware considerations"**
**ELECTRONIQUE, no. 264, mars 1979, pages 19-23, Paris FR, A. SABATIER: "Les concepts-système de Intel: L'utilisation du Multibus"**
**ELECTRONICS INTERNATIONAL, vol. 53, no. 8, avril 1980, pages 135-140, New York, US, G. SAWYER et al.: "Special-function modules ride on computer board"**
**ELECTRONICS ENGINEERING; vol. 52, no. 642, septembre 1980, pages 111,113,117,119,122, Londres, GB, G. SAWYER et al.: "New concepts in single board computers"**

(73) Titulaire: **Etablissement Public de Diffusion dit "Télédiffusion de France", 21-27 rue Barbès, F-92120 Montrouge (FR)**

(72) Inventeur: **Dublet, Guy Pierre, 227, rue de Fougères, F-35000 Rennes (FR)**

(74) Mandataire: **Le Guen, Louis François, Cabinet Louis Le Guen 1, avenue Edouard VII B.P. 91, F-35802 Dinard Cédex (FR)**

ACTORUM AG

**Description**

La présente invention concerne la structure d'un point d'accès à un réseau de diffusion de données par paquets et, plus particulièrement, d'un réseau de diffusion DIDON.

Un système de télédiffusion de données par paquets et ses variantes ont été décrits dans les brevets FR-A 2 313 825 (US-A 4 115 662) et FR-A 2 404 350, dont la présente demanderesse était également co-demanderesse. Par ailleurs, ce système a été mis en œuvre sous le nom de «réseau DIDON» par l'Etablissement public de diffusion dit «Télédiffusion de France».

Dans un article intitulé «Construction d'un réseau de diffusion de données par paquets: le point d'accès DIDON», par Y. Noirel, paru dans la revue technique «Radiodiffusion-télévision», no 60, novembre-décembre 1979, pages 20 à 25, l'évolution récente et souhaitée des matériels de multiplexage vidéo-données a été analysée et la conclusion de cette analyse est que l'accès au réseau DIDON, entrée et sortie, doit être traité par l'intermédiaire d'un coupleur spécialisé inclus dans un nœud de commutation dit «point d'accès» établissant des liaisons entre un ensemble d'entrées et un ensemble de sorties. Notamment, dans cet article, on a montré un point d'accès comprenant un jeu de coupleurs réseau, un coupleur réseau DIDON, une mémoire et une unité centrale reliés par un bus du type «multibus». Dans chacun des coupleurs réseau, est implanté, outre le logiciel de gestion du coupleur, un ensemble de sous-programmes permettant les échanges avec la mémoire commune. Les communications inter-réseaux s'établissent par l'intermédiaire de voies virtuelles. La mémoire commune, où sont stockées les données en transit, comporte une table de connexion décrivant les liens établis par les voies virtuelles.

Un objet de la présente invention consiste à prévoir une structure de point d'accès utilisable dans les équipements d'émission d'un réseau de diffusion de paquets.

On rappelle qu'un réseau de diffusion de paquets doit être capable de servir en multiplex temporel un certain nombre de sources. Les sources peuvent avoir des caractéristiques très différentes les unes des autres en ce qui concerne leurs débits et leurs intelligences. Certaines requièrent la gestion de protocoles de haut niveau, par exemple X25, alors que d'autres ont besoin de mémoire intermédiaire dans le réseau de diffusion pour la diffusion cyclique de leurs message. Enfin, le nombre de sources à connecter sur un site particulier du réseau de diffusion peut être très variable.

Un objet de l'invention consiste notamment à prévoir une structure de point d'accès à intelligence répartie comportant des modules reliés par un bus général, les modules comprenant un module processeur central assurant notamment les fonctions générales de gestion avec les autres modules, un module multiplexeur collectant les paquets de données fabriqués dans les différents coupleurs d'accès au réseau, un module d'insertion-modulation relié directement à la sortie du module multiplexeur en assurant l'adaptation au réseau de diffusion, et un organe de commande et de contrôle.

Pour atteindre cet objectif, ainsi que d'autres, le structure a des caractéristiques qui font l'objet des revendications jointes. Des combinaisons de moyens permettant de mettre en œuvre une telle structure sont également décrites dans les revendications jointes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est le bloc-diagrmame d'un point d'accès, suivant l'invention,

la Fig. 2 est le bloc-diagramme d'un coupleur de la Fig. 1,

la Fig. 3 est le bloc-diagramme du multiplexeur de la Fig. 1,

la Fig. 4 est le bloc-diagramme du modulateur de la Fig. 1,

la Fig. 5 est le bloc-diagramme de l'organe de commande de la Fig. 1,

la Fig. 6 est un schéma illustrant le fonctionnement du point d'accès de la Fig. 1,

les Figs. 7 à 13 sont des diagrammes illustrant le logiciel du mode commande du point d'accès de la Fig. 1,

les Figs. 14 à 20 sont des diagrammes illustrant le logiciel du processeur central de la Fig. 1, et

les Figs. 21 à 30 sont des diagrammes illustrant le logiciel d'un coupleur de la Fig. 1.

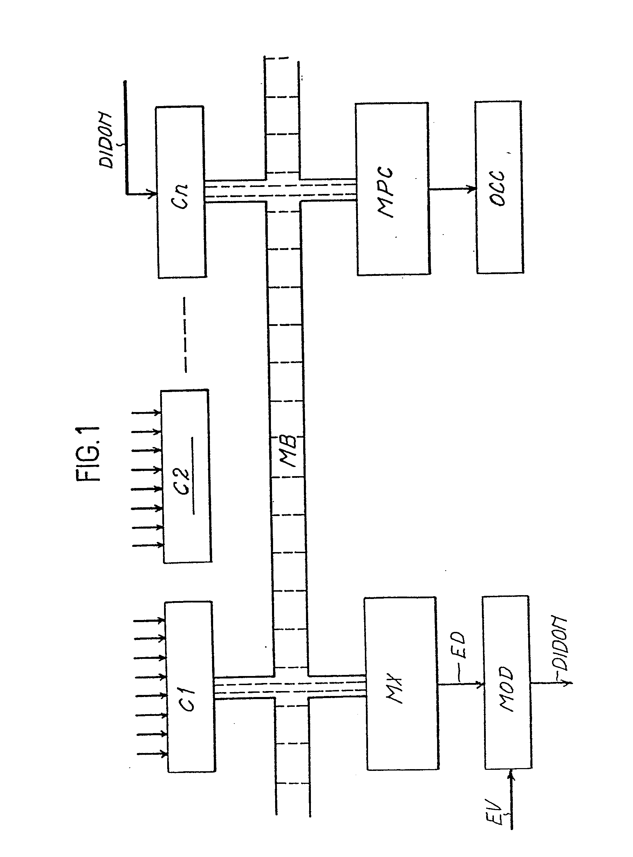

Le point d'accès de la Fig. 1 comprend un processeur central MPC, un multiplexeur MX, des coupleurs d'accès C1 à Cn, un bus MB reliant ces divers organes entre eux, un organe de commande et de contrôle OCC relié au processeur MPC et un circuit d'insertion de modulation MOD monté entre le multiplexeur MX et le réseau de diffusion utilisé. En pratique, les circuits MPC, OCC, MX, C1 à Cn et MOD occupent chacun une carte de circuit imprimé.

Le bus MB est du type «MULTIBUS» fabriqué par la société INTEL.

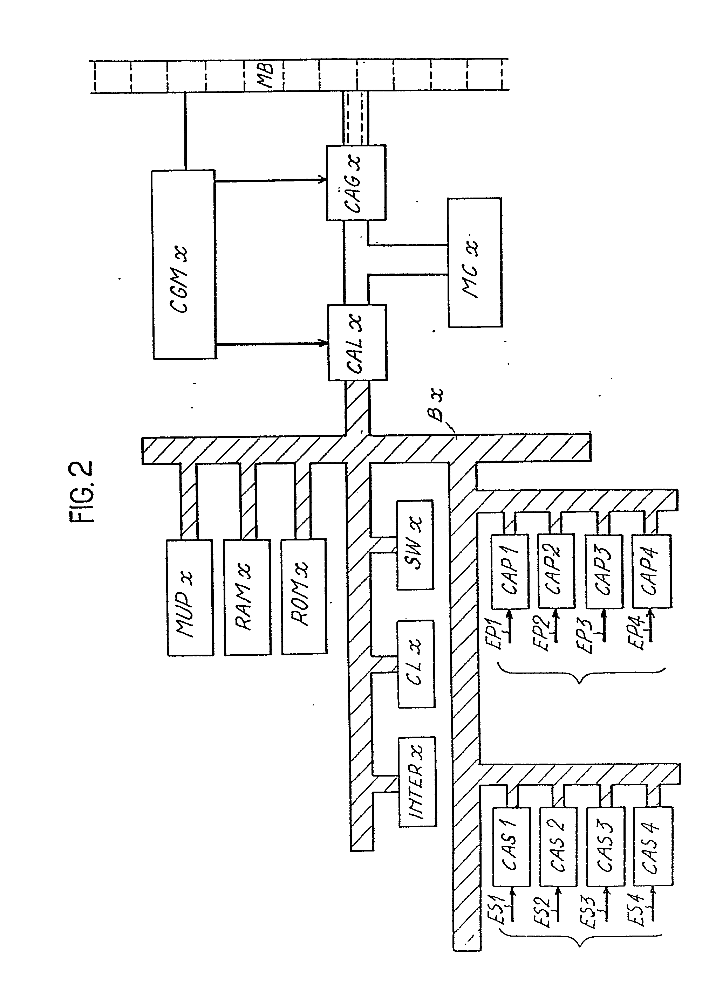

Un coupleur d'entrée Cx est montré à la Fig. 2. Il s'agit physiquement d'une carte du type microordinateur à huit entrées. Ses huit entrées sont divisées en quatre entrées de type série ES1 à ES4 et quatre entrées de type parallèle EP1 à EP4. Les entrées série ES1 à ES4 sont conformes à la norme V24 du CCITT tandis que les entrées EP1 à EP4 sont conformes à la prise informatique définie dans le brevet 2 268 308.

Le coupleur Cx comprend une mémoire commune à double accès MCx, un microprocesseur MUPx, une mémoire vive interne RAMx, une mémoire morte ROMx, un circuit d'interruptions INTERx, une horloge CLx, des contacts SWx, des circuits d'accès série CAS1 à CAS4 respectivement relié aux entrées série ES1 à ES4 et des circuits d'accès parallèle CAP1 à CAP4 respectivement reliés aux entrées parallèle EP1 à EP4. La mémoire commune MCx est associée à un circuit d'accès local CALx et un circuit d'accès général CAGx. Côté externe (par rapport à la mémoire MCx), le circuit CALx est relié, par un bus local Bx, aux autres circuits du coupleur, tandis que le circuit CAGx est relié au multibus MB. Côté interne, les circuits CALx et CAGx sont classiquement reliés à la mémoire MCx. Enfin, les circuits CALx et CAGx ont leurs entrées de commandes respectives reliées aux sorties correspondantes d'un circuit de gestion CGMx qui est lui-même relié au multibus MB.

Ainsi, la mémoire MCx peut être adressée soit par le processeur MUPx à travers le bus Bx et le circuit CALx, soit par un autre processeur quelconque des autres modules du point d'accès à travers le multibus MB. Dans ce dernier cas, le coupleur est utilisé en mode esclave. De plus, le circuit CAGx permet également au coupleur d'avoir accès au multibus en mode maître pour accéder à des ressources extérieures, telles que des mémoires ou des dispositifs d'entrée/sortie.

Le circuit d'interruption INTERx permet de détecter l'arrivée d'une donnée sur l'un des huit accès ES1 à ES4 et EP1 à EP4. L'horloge CLx engendre les fréquences bit nécessaires au fonctionnement des entrées série ES1 à ES4. L'ensemble des microcontacts SWx permet de modifier à volonté les paramètres de fonctionnement des entrées série ES1 à ES4, tels que la longueur des caractères, le nombre d'éléments STP, la parité.

La mémoire vive interne RAMx est utilisée pour emmagasiner les données purement locales du coupleur, en évitant ainsi de charger inutilement la mémoire commune MCx qui est ainsi réservée uniquement aux données devant transiter par le multibus MB.

Le logiciel implanté dans un coupleur sera décrit en détail dans la suite.

A titre indicatif, la carte d'un coupleur est de préférence fabriquée en utilisant, pour CAS1 à CAS4, des circuits INTEL 8251, pour CAP1 à CAP4, des circuits LATCH 74LS374, pour MUPx, un circuit INTEL 8085, pour ROMx, une mémoire HM6116 de 2 Koctets, pour ROMx, deux boîtiers de mémoire 2732 de 4 Koctets, pour INTERx, un circuit INTEL 8259, pour CLx, un circuit INTEL 8253, pour MCx, deux boîtiers de mémoire HM6116 de 4 Koctets, pour CALx, un circuit 74LS240, pour CAGx, un circuit INTEL 8286, pour CGMx, un circuit INTEL 8219, et pour SWx, des contacteurs AMP.

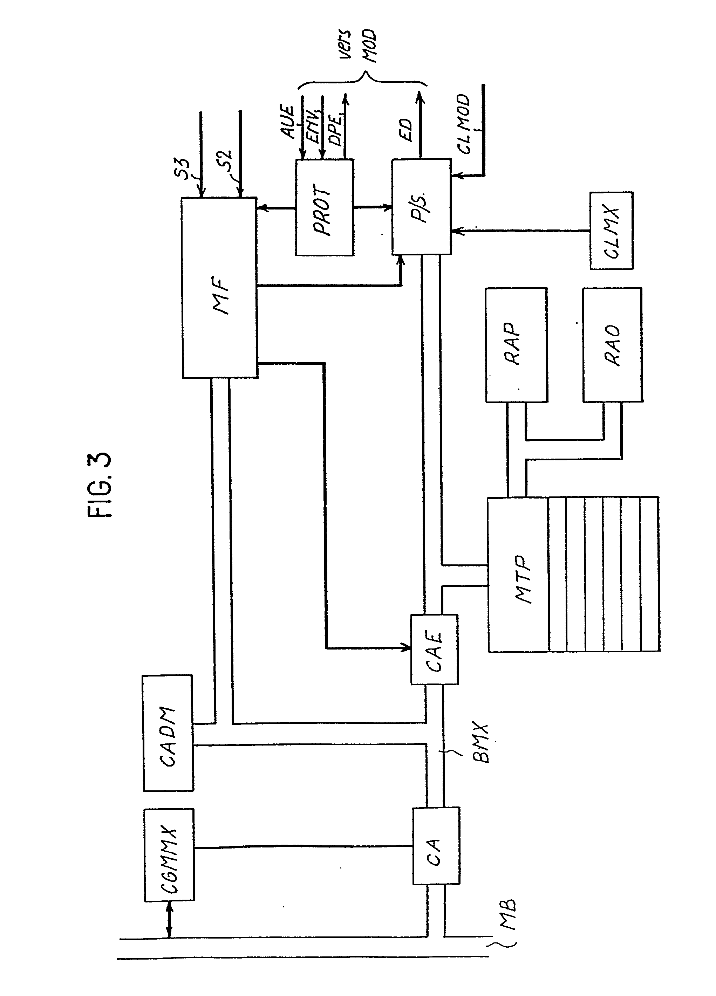

Le multiplexeur MX est montré à la Fig. 3. Il s'agit d'un circuit non intelligent qui ne comporte pas de processeur.

Il comprend un circuit d'accès CA servant d'interface entre le multibus MB et un bus local BMX, un cirucit de gestion de multibus CGMMX relié à MB et à CA, une mémoire tampon de paquets MTP à laquelle sont associés un circuit d'accès d'écriture CAE et un convertisseur parallèle/série P/S dont le circuit d'entrée sert de circuit d'accès de lecture pour la mémoire MTP. Il comprend encore un circuit d'accès direct mémoire CADM, des registres d'adresse de page RAP et d'adresse d'octet RAO, une mémoire de fenêtre MF, un circuit de gestion PROT et une horloge CLMX. Le bus BMX relie les circuits CA, CAE, CADM et la mémoire MF. La mémoire MF commande le circuit CAE et le convertisseur P/S. Le circuit PROT est relié à la mémoire MF et au convertisseur P/S.

La fonction de base du multiplexeur Mx est celle d'une mémoire tampon entre les coupleurs C1 à Cn et le modulateur MOD. Quand le support de transmission du système est un réseau de diffusion public de télévision, comme on l'a mentionné dans le préambule, le multiplexeur comporte des caractéristiques spécifiques qui seront indiquées ci-après.

Par le circuit d'accès direct mémoire CADM (Fig. 3) associé au circuit CA de gestion du multibus MB, il peut lire les paquets DIDON préalablement constitués dans un ou plusieurs coupleurs C1 à Cn. En effet, il peut accéder au bus MB en tant que mâitre pour engendrer les adresses mémoires correspondant aux emplacements des paquets dans les coupleurs C1 à Cn.

La mémoire MTP est organisée en pages dont la taille, programmable, est ajustée en fonction de la taille des paquets diffusés. La mémoire MTP est du type à double accès, l'un en écriture géré par le circuit d'accès direct à la mémoire CADM par l'intermédiaire de CAE, l'autre en lecture géré par un automate d'expédition comprenant l'ensemble des circuits MF et PROT.

L'adressage de la mémoire tampon de paquets MTP est effectué à deux niveaux:
– niveau choix de la page: des pointeurs, dans le registre RAP, repèrent, à tout moment, le numéro de la dernière page en écriture et celui de la dernière page en lecture,
– niveau octet dans la page: constitué d'un index, dans RAO, fonctionnant aussi bien en phase d'écriture qu'en phase lecture.

L'automate d'expédition des paquets est prévu pour l'utilisation du système DIDON sur support vidéo. En effet, il est nécessaire de pouvoir insérer les paquets sur une ou plusieurs lignes, préalablement choisies, de la trame de télévision. De plus, à l'intérieur d'une ligne, il faut pouvoir insérer le paquet à un instant précis correspondant au début de la ligne active.

A cet effet, le circuit de gestion PROT assure la gestion du protocole avec le modulateur MOD, lequel permet d'acquérir les instants d'insertion. Dans la mémoire de fenêtre MF, sont enregistrés les numéros des lignes TV pour lesquelles l'insertion des données est autorisée. La mémoire MF peut être programmée à partir du processeur central MPC à travers le multibus MB. La mémoire MF n'autorise la lecture de la mémoire tampon MTP qu'aux instants pour lesquels elle a été programmée. L'automate d'expédition lance effectivement la lecture d'un paquet à partir d'un instant précis fourni par le modulateur MOD et, bien entendu, à condition que la mémoire MTP ne soit pas vide. Les données lues dans la mémoire MTP sont mises en série dans le convertisseur P/S dont la sortie est reliée au modulateur MOD. Les données sont délivrées par le convertisseur P/S à une fréquence bit qui est fournie par l'horloge CLMOD du modulateur. L'horloge interne CLMX du multiplexeur peut être utilisée en cas de défaut de l'horloge CLMOD.

La sortie du convertisseur P/S est reliée par la liaison ED au modulateur MOD. Deux entrées AUE et ENV et une sortie DPE du circuit PROT sont reliées à des sorties et entrée correspondantes du modulateur MOD. Le signal AUE, ou autorisation à émettre, reçu à l'entrée AUE indique au circuit PROT que le circuit MOD est prêt à recevoir une demande d'émission. Le signal DPE, ou demande pour émettre, sur la sortie DPE constitue la réponse du circuit MX au signal AUE et indique que le multiplexeur MX a des données à émettre. Le signal ENV, ou envoyez les données, sur l'entrée ENV est la suite logique du dialogue AUE-DPE et invite le multiplexeur MX à émettre.

A titre indicatif, les circuits CGM, CADM, MTP, MF, RAP, RAO, CA, CAE, P/S et PROT sont, de préférence, mis en œuvre sous la forme de circuits INTEL 8218, 8237, HM 6176 en quatre boîtiers de 2 Koctets, 2125, 74LS150, 74LS491, INTEL 8286, 8286, 74LS166 et 74LS74.

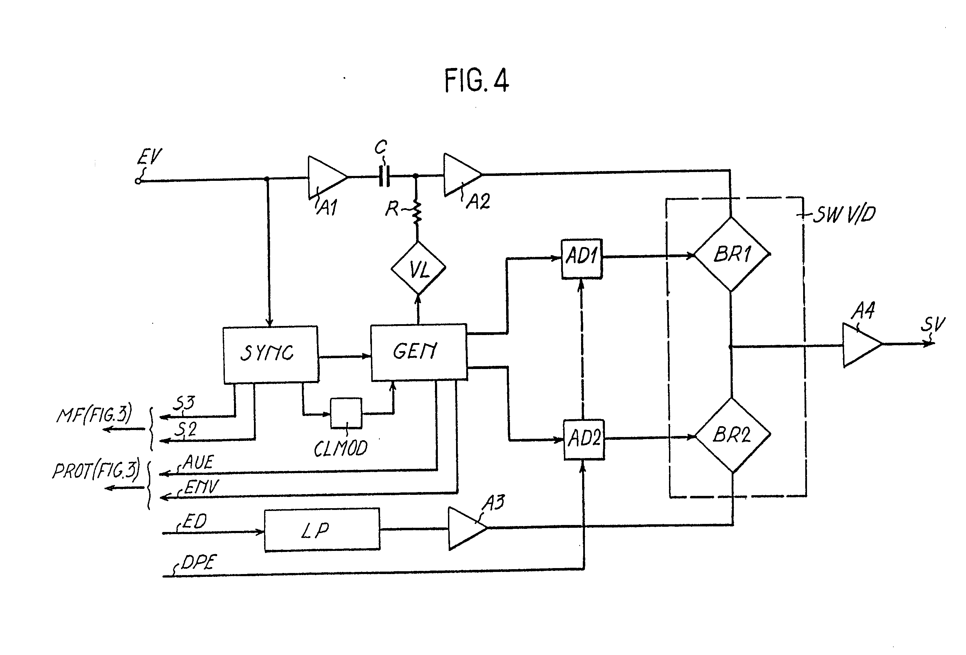

Le modulatuer MOD, Fig. 4, a pour fonction générale l'adaptation des données fournies par le multiplexeur MX au support de transmission qui est, dans l'exemple décrit, un signal vidéo.

Son entrée vidéo EV, laquelle est reliée à la sortie d'un générateur de vidéo classique, tel qu'une caméra TV, est reliée, d'une part, à un amplificateur A1 et, d'autre part, à l'entrée d'un circuit SYNC d'extraction des signaux de synchronisations ligne et trame. La sortie de l'amplificateur A1 est reliée par un condensateur de liaison C à l'entrée d'un autre amplificateur A2. La sortie de l'amplificateur A2 est reliée à une première entrée de signal d'un commutateur vidéo/données SWV/D.

Une sortie du circuit SYNC est reliée à l'entrée d'un générateur d'instants caractéristiques GEN. Cette sortie transmet au générateur GEN les signaux de synchronisation ligne permettant de déterminer l'instant d'émission dans la ligne. Deux autres sorties S2 et S3 du circuit SYNC sont reliées à l'entrée de commande de la mémoire de fenêtre MF du multiplexeur MX. La sortie S2 transmet les signaux de début d'une image de télévision et la sortie S3 sert à identifier par simple comptage les lignes de l'image. Enfin, une sortie du circuit SYNC, délivrant les signaux de fréquence ligne, est reliée à l'entrée de synchronisation d'une horloge à quartz CLMOD dont la sortie est également reliée au générateur GEN.

Deux sorties du générateur GEN forment les sorties AUE et ENV du modulateur MOD vers le circuit PROT du multiplexeur MX. Deux autres de ces sorties sont respectivement reliées à des entrées de signal de deux adaptateurs de niveau AD1 et AD2, dont les entrées de commande sont reliées à l'entrée DPE du modulateur. Une dernière sortie du générateur GEN est reliée par un circuit de clampage VL et une résistance R à l'entrée de l'amplificateur A2.

Les données à transmettre par le modulateur MOD lui sont fournies par le convertisseur P/S, Fig. 3, sur le fil ED qui est relié à l'entrée d'un filtre LP. La sortie du filtre LP est reliée à l'entrée d'un amplificateur A3 dont la sortie est reliée à la seconde entrée du commutateur SWV/D. La sortie du commutateur SWV/D est reliée à un émetteur de diffusion, non montré, par l'intermédiaire d'un amplificateur A4.

Le commutateur SWV/D comprend deux ponts de diodes BR1 et BR2 dont les entrées sont respectivement commandées par les sorties des circuits AD1 et AD2. Les sorties des ponts BR1 et BR2 sont reliées à la sortie du commutateur. En pratique, un seul pont BR1 ou BR2 est en fonctionnement à la fois. Les instants de fonctionnement étant fixés par le générateur GEN, par l'intermédiaire des adaptateurs de niveau AD1 et AD2.

Le filtre LP sert à mettre en forme les données binaires transmises par le multiplexeur MX de manière à ce que leur spectre de fréquence coïncide avec la largeur du canal vidéo utilisé dans l'émetteur de diffusion. Par ailleurs, les amplificateurs A3 et A4 et les adaptateurs AD1 et AD2 sont prévus de manière que le niveau électrique de sortie de A4 atteigne, pour les bits «1», une valeur égale à celle du niveau du blanc (700 mV) ou à une certaine proportion réglable du niveau du blanc.

Le générateur GEN peut être constitué par une mémoire morte adressée par l'horloge CLMOD pour délivrer les signaux suivants:

– un signal de commutation données/vidéo, qui sera décrit ci-après,

– un signal de début d'insertion AUE à destination du multiplexeur MX, et

– un signal de début de ligne pour synchroniser le circuit de clampage VL.

Dans le commutateur SWD/V, la commutation entre les deux ponts BR1 et BR2 est commandée à un instant caractéristique apparaissant en début de ligne par le signal de commutation données/vidéo fourni par le générateur GEN, d'une part, et par le signal de fenêtre d'insertion fourni sur DPE par la mémoire de fenêtre, d'autre part. Pour une ligne TV transmettant de la vidéo normale, l'adaptateur AD1 est activé assurant la transmission par le pont BR1 et, par ailleurs, le circuit de clampage VL aligne le niveau de suppression de la voie vidéo entrante sur 0 volt, soit sur un potentiel identique à celui du niveau des «0» sur la voie de données à la sortie de A3. Pour une ligne transmettant des données, à partir du début de ligne active, qui succède à la fin du signal analogique classique de début de ligne, l'adaptateur AD2 est activé assurant la transmission par le pont BR2.

A titre indicatif, les différents circuits constituant le modulateur MOD peuvent être mis en

œuvre comme suit: amplificateurs A1 et A4, TDB2022, amplificateurs A2 et A3, LH0033, générateur GEN, mémoire 6349 de 1 Koctet, ponts BR1 et BR2, HP2813, et le filtre LP est un filtre passe-bas.

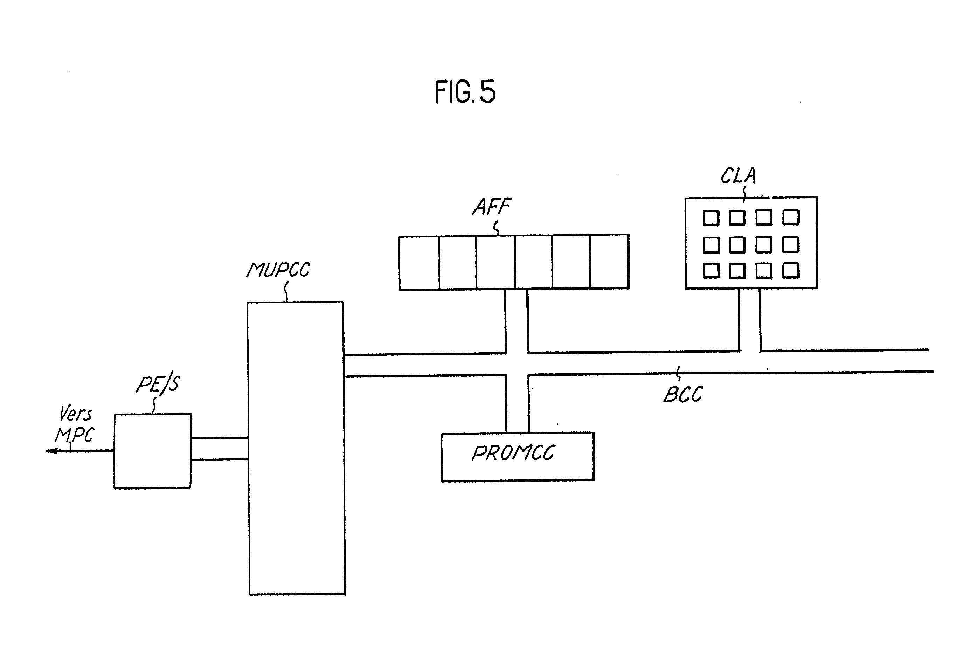

Le circuit de commande et de contrôle OCC, Fig. 5, permet d'assurer la liaison entre l'opérateur et le processeur central MPC du point d'accès.

Il comprend un clavier alphanumérique CLA, un dispositif d'affichage AFF, un processeur MUPCC et une mémoire morte PROMCC, reliés ensemble par un bus BCC. Le processeur MUPCC est relié à un port d'entrée/sortie PE/S qui est relié au processeur central MPC.

Le clavier CLA comporte douze touches et le dispositif d'affichage AFF comporte six afficheurs du type électroluminescent.

Le processeur MUPCC est programmé de façon à observer l'enfoncement des touches de CLA par l'opérateur, à communiquer le code de la touche enfoncée au processeur central MPC par PE/S. Dans l'autre sens, le processeur MUPCC reçoit, par PE/S, les codes émis par le processeur central MPC et les affiche sur l'un des six digits du dispositif d'affichage AFF.

Un petit protocole de dialogue entre le processeur central MPC et l'organe de commande OCC permet de réaliser des opérations élémentaires telles que l'effacement des afficheurs et l'inhibition ou l'activation du clavier.

A titre indicatif, les circuits composants l'organe OCC peuvent être mis en œuvre comme suit: touches PREH pour le clavier CLA, afficheurs TIL311 pour le dispositif AFF, processeur 8035 pour MUPCC, mémoire 2716 de 2 Koctet pour la PROMCC et circuit 8286 pour le port PE/S.

Le processeur central MPC fait office de maître du jeu. Il assure la liaison avec l'opérateur par OCC. Il assure la scrutation des coupleurs C1 à Cn et informe le multiplexeur MX des endroits où se trouvent les paquets à transmettre. On rappelle que, contrairement aux coupleurs, le multiplexeur n'est pas un organe intelligent et qu'il ne peut donc effectuer lui-même la scrutation des coupleurs. Enfin, le processeur MPC assure la synchronisation de l'ensemble des processeurs du point d'accès lors de l'initialisation générale. Le processeur MPC peut être un processeur du type INTEL 8024-2.

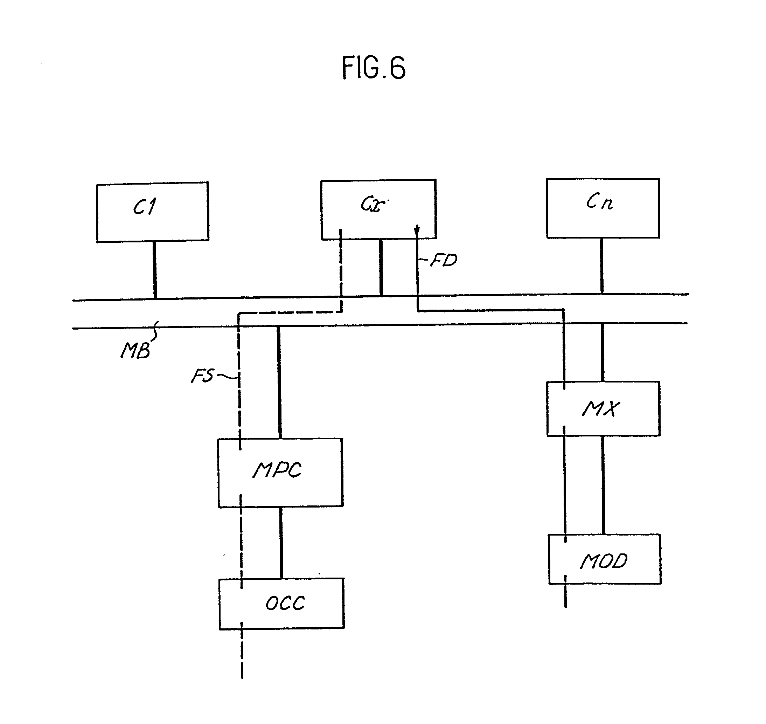

Comme le montre la Fig. 6, les flux de données, tels qu'indiqué par la ligne FD en trait plein de Cx à MX, empruntent évidemment le bus MB du type MULTIBUS, mais ne transitent pas par le processeur central MPC. Il y a un accès direct à la mémoire d'un coupleur à partir du multiplexeur.

Les flux de signalisation, tels qu'indiqué par FS en traits tirets de MPC à Cx, empruntent également le bus MB.

Les règles de dialogue entre les processeurs des coupleurs et le processeur central peuvent se classer en deux modes:

– le mode transfert, quand il s'agit d'un dialogue régissant les échanges de paquets DIDON entre les coupleurs et le multiplexeur, sous la commande du processeur central, ce qui, en fait, constitue le dialogue en régime continu, et

– le mode commande, quand il s'agit d'un dialogue régissant les échanges d'information de signalisation entre le processeur central et les coupleurs.

En ce qui concerne les règles de dialogue en mode commande, avant de décrire le logiciel de commande, on rappelle que les coupleurs, s'ils sont intelligents n'en demeurent pas moins des esclaves, c'est-à-dire qu'ils ne peuvent en aucun cas s'approprier le bus général MB. Vis-à-vis du processeur central MPC, les coupleurs C1 à Cn ne sont pas autre chose que des mémoires. Le dialogue entre les coupleurs et le processeur central se fait par des écritures/lectures de tables localisées dans les mémoires RAMx des coupleurs. Plus précisément, ces tables de dialogue sont localisées en début de mémoire RAMx.

En ce qui concerne le logiciel du mode commande, on va d'abord définir la notion de «contexte».

L'ensemble des variables de ce logiciel est regroupé dans un «contexte général». C'est cet ensemble et lui seul qui est susceptible d'être modifié par l'opérateur; tout paramètre non présent dans le contexte général est considéré comme une constante.

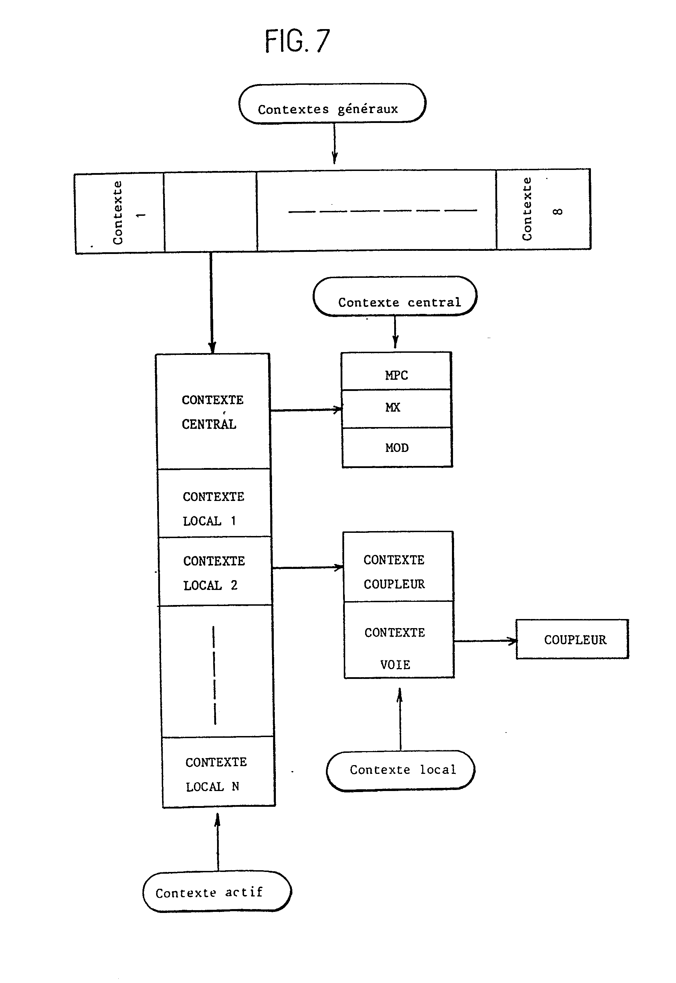

En fait, sont présents dans la mémoire centrale du processeur central MPC, un ensemble de 8 contextes généraux qui sont illustrés à la Fig. 7. Ces contextes généraux sont préprogrammés et ajoutés au logiciel du processeur central MPC. A un instant donné, un des 8 contextes généraux, choisi par l'opérateur, est à l'état actif, c'est à dire que les valeurs des variables qu'il contient sont utilisées aussi bien par le processeur central MPC que par les coupleurs C1 à Cn et le multiplexeur MX.

Un contexte général se compose de 2 parties:

– un «contexte central» qui regroupe toutes les informations relatives à la partie centrale de l'appareil: processeur central MPC, multiplexeur MX, modulateur MOD, et

– un ensemble de «contextes locaux» qui regroupent les informations relatives à chacun des coupleurs présents.

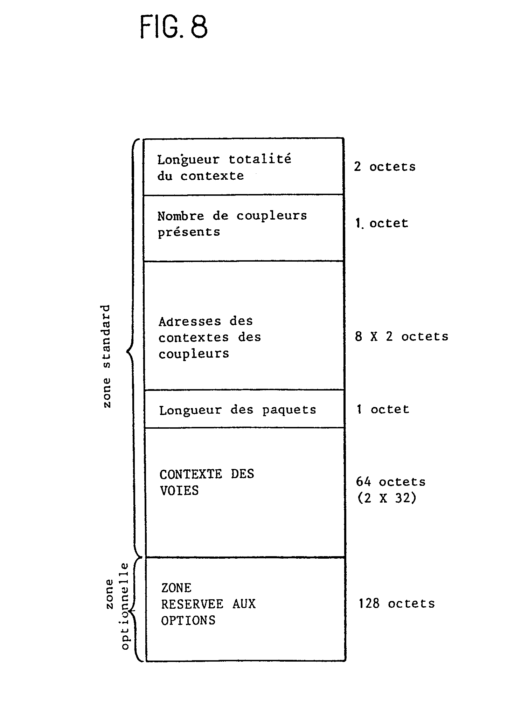

Un contexte central, illustré à la Fig. 8, est formé de deux parties:

– une «zone standard», commune à toutes les applications,

– une «zone optionnelle», dépendant de l'application.

Une zone standard comprend, dans l'ordre:

– la longueur, exprimée en octets, de l'ensemble du contexte général, l'information de longueur occupant 2 octets,

– le nombre de coupleurs présents, ce qui occupe 1 octet,

– les adresses des contextes des coupleurs par référence au début du contexte général, chaque adresse occupant 2 octets, l'octet de poids faible étant en tête, 8 adresses étant prévues, ce qui correspond à un champ d'une taille de 16 octets,

– la longueur maximale des paquets DIDON, occupant 1 octet, étant entendu que le nombre maximal d'octets que peut comporter un paquet comprend l'en-tête,

– la zone de contexte des voies comprenant, par voie, le numéro de la voie numérique XYZ et le numéro de coupleur qui gère l'accès muni de ce numéro de voie, deux octets étant utilisés pour chaque voie, le premier indiquant les valeurs de X et Y et le second les valeurs de Z et du numéro de coupleur, ce qui conduit à une zone de 64 octets pour gérer 32 voies DIDON simultanément.

A la suite du contexte des voies, une zone de 128 octets est réservée aux options.

Il faut noter que dans la suite de la description, conformément aux règles définies pour les circuits INTEL, toute valeur de donnée ou d'adresse stockée en mémoire sur 2 octets se présente avec l'octet de poids faible en tête.

Les coupleurs sont, dans l'exemple décrit, numérotés de 1 à 8. Un numéro débanalisé «15» est utilisé pour matérialiser le processeur central MPC par lui-même de façon à pouvoir éventuellement engendrer des voies numériques à l'intérieur même du point d'accès, soit une voie de test par exemple.

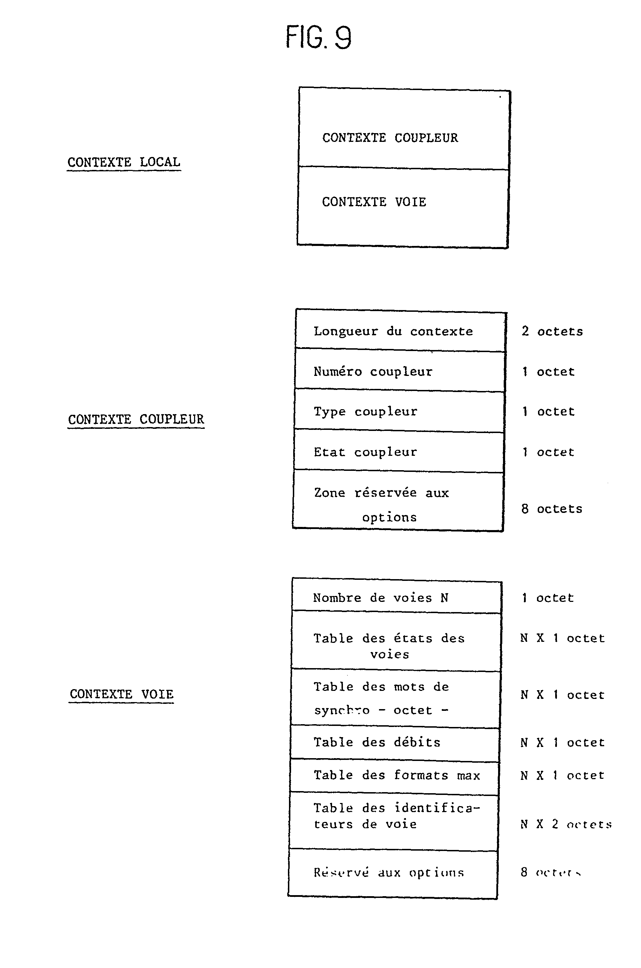

Un contexte local, illustré à la Fig. 9, est formé de 2 parties:

– un contexte coupleur regroupant les informations communes à toutes les voies traitées par le coupleur, et

– un contexte voie regroupant les informations relatives à chacune des voies traitées par le coupleur.

Un contexte coupleur comprend, dans l'ordre:

– la longueur totale du contexte local, occupant 2 octets,

– le numéro du coupleur entre 1 et 8, occupant donc 1 octet, ce numéro permettant le repérage des coupleurs les uns par rapport aux autres, à un numéro de coupleur correspondant un champ d'adressage de mémoire RAM spécifique,

– le type de coupleur, occupant un octet, indiquant la structure matérielle du coupleur, sans indication quant au logiciel d'application implanté,

– l'état du coupleur, occupant 1 octet, un bit y indiquant si le coupleur est en ou hors service, et

– une zone de 8 octets réservée aux options.

Un contexte voie est organisé comme suit:

– un octet indiquant le nombre de voies N traitées par le coupleur,

– une table de N octets décrivant l'état des N voies et indiquant si la voie est en service ou non et sa priorité,

– une table des mots de synchronisation, soit un mot de 1 octet par voie, soit N octets,

– une table des débits, un code entre 1 et 25 indiquant le débit maximum autorisé pour chaque voie, soit un champ de N octets,

– une table des formats maximaux, c'est-à-dire du nombre maximal d'octets contenus dans un bloc de données, soit N octets,

– une table des numéros XYZ de voie, soit 2N octets, et

– une zone de 8 octets réservée aux options.

On va maintenant décrire le déroulement d'une commande.

Comme mentionné ci-dessus, l'ensemble des paramètres de fonctionnement du point d'accès, suivant l'invention, est regroupé au sein d'un contexte. Ce dernier est utilisé, pour ce qui le concerne, par le processeur central. Toutefois, la plus grande partie des paramètres concerne les coupleurs, ce qui correspond à la notion de contexte local. Il est donc nécessaire d'instituer un processus de transfert de l'information du processeur central MPC, qui possède la maîtrise du contexte, vers les coupleurs. En pratique, dans chaque coupleur, est mémorisée l'image du contexte local relatif au coupleur concerné. Une commande émanant du processeur central consiste à faire modifier tout ou partie de cette image du contexte local et à en informer le coupleur.

Une commande constitue en fait un dialogue entre le processeur central MPC qui envoie la commande et le coupleur Cx qui la reçoit, la prend en compte et fournit un compte rendu d'exécution.

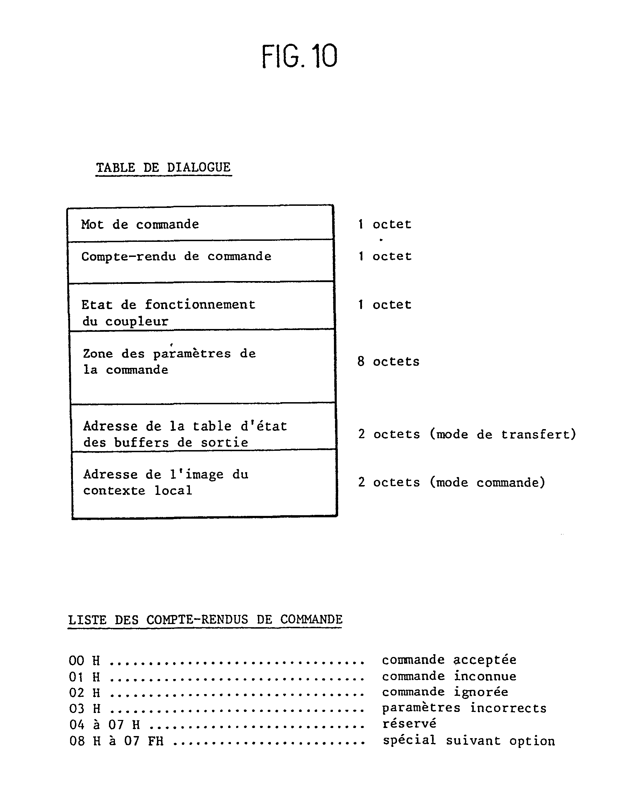

Ce dialogue s'institue au sein d'une table illustrée à la Fig. 10 et localisée dans la mémoire commune MCx du coupleur Cx. Plus précisément, elle commence à la première adresse de la zone de mémoire commune MCx, c'est-à-dire la mémoire accessible aussi bien par le processeur local MUPx que par le processeur central MCP, via le bus MB. Cette adresse est implicitement connue du processeur central comme étant un paramètre spécifique d'une application.

La table de dialogue comprend:

– un octet pour le mot de commande par lequel le processeur central MPC indique le type de commande envoyée et dans lequel le bit «7» est un flag de synchronisation permettant au processeur central d'indiquer s'il a envoyé une commande, en le mettant à «1», et au coupleur d'indiquer qu'il l'a prise en compte, en le mettant à «0»,

– un octet pour le compte-rendu de commande, qui permet au coupleur d'indiquer la suite donnée à la commande,

– un octet donnant l'état de fonctionnement du coupleur, dans lequel le bit «7» indique un défaut de nature quelconque au niveau du coupleur, rendant son fonctionnement impossible, les autres bits pouvant être utilisés optionnellement dans le cadre d'une application,

– une zone des paramètres de la commande de 8 octets qui permet la transmission de paramètres très particuliers qui n'auraient pas leur place dans le contexte local,

– l'adresse de la table d'état des buffers de sortie sur 2 octets, cette adresse concernant le mode transfert qui sera décrit ci-après,

– l'adresse de l'image du contexte local, sur 2 octets, le coupleur ayant la possibilité de stocker son image du contexte local où il veut, pourvu que ce soit dans la mémoire commune MCx.

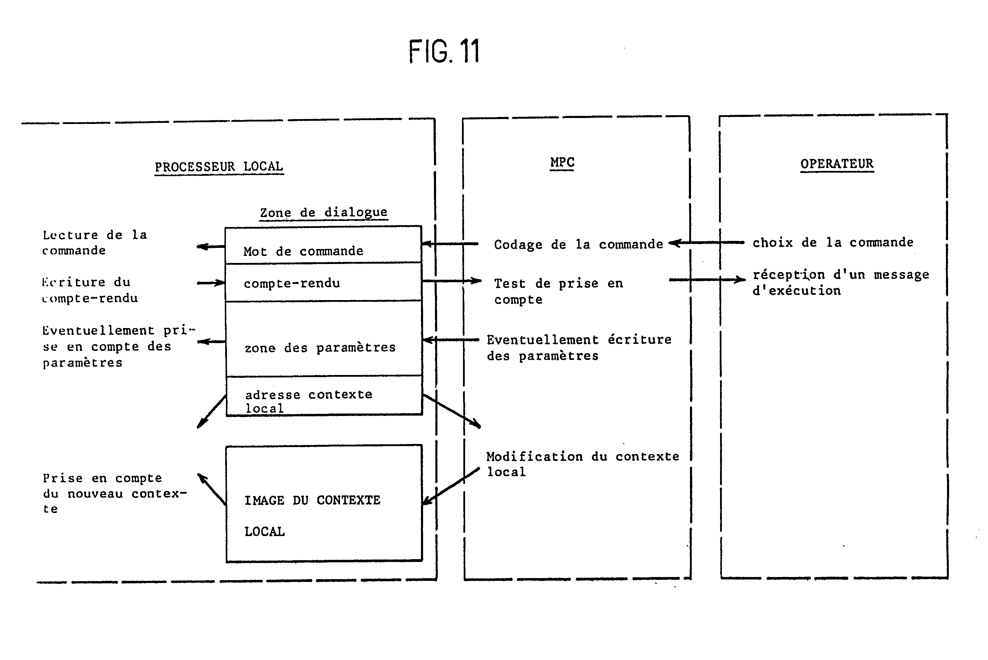

On va maintenant décrire le déroulement, illustré à la Fig.11, des opérations constituant une commande en utilisant les différentes entités que sont les contextes et la table de dialogue décrits ci-dessus.

L'initiative revient toujours au processeur central MPC, le plus souvent à la suite d'une sollicitation de l'opérateur à l'aide du clavier du circuit OCC. Le processeur MPC commence par vérifier que la commande précédente concernant le coupleur intéressé a bien été prise en compte, en examinant le bit «7» du mot de compte-rendu de commande, puis il met à jour l'image du contexte local par une réécriture partielle ou totale et, enfin, positionne le mot de commande, en mettant son bit «7» à «1».

Chaque coupleur est en permanence en attente d'une commande, c'est-à-dire qu'il observe le mot de commande et détecte le passage à «1» du flag de synchronisation ou bit «7». Une autre possibilité consisterait, si le matériel le permettait, à engendrer une interruption sur écriture du mot de commande. On rappelle que l'adresse de ce mot est débanalisée puisqu'étant impérativement la première de la mémoire commune MCx.

Ensuite, vient l'analyse de la commande, le positionnement du compte-rendu, le traitement adéquat et la mise à «0» du flag de synchronisation.

Si, pour le mode commande, des règles générales ont pu être fixées, il n'en est pas moins nécessaire de prévoir des options qui, différentes pour chaque application, doivent tenir compte des particularités de tel coupleur ou de tel logiciel d'application.

Par contre, pour le mode transfert, les règles sont plus simples et sont fixées entièrement et définitivement pour toutes les applications.

Les coupleurs C1 à Cn, quels qu'ils soient, simples ou complexes, monovoie ou multivoies, fournissent au multiplexeur MX, sous contrôle du processeur central MPC, des données regroupées sous une forme unique et immuable, c'est-à-dire le paquet DIDON complet, préfixe et bloc de données, inséré dans un buffer de taille au moins égale à la longueur maximale des paquets dans l'application considérée.

Le principe du polling a été retenu au détriment du procédé par interruptions qui, du fait de l'architecture fortement décentralisée eût été délicate à mettre en œuvre. Au demeurant, le polling a cet avantage d'assurer un minimum de puissance de traitement, réglée comme on le désire pour les tâches de background tels le dialogue opérateur ou la surveillance des activités des voies.

Dès leur arrivée par un circuit d'accès CAS1 à CAS4 ou CAP1 à CAP4 d'un coupleur Cx, les octets de données sont stockés dans un buffer. Ils n'en bougeront pas jusqu'au moment de l'expédition, au cours de laquelle ils seront transférés dans la mémoire tampon MTP du multiplexeur MX. Pour repérer le stade d'évolution d'un paquet DIDON, on affecte à chaque buffer un état instantané. De la valeur de cet état, vont dépendre les actions entreprises par les processeurs, selon des règles précises qui constituent le mode transfert.

L'état d'un buffer est constitué de 3 attributs, chacun de type binaire:
- attribut 1: LIBRE/OCCUPE
- attribut 2: ENTREE/SORTIE
- attribut 3: VIDE/PLEIN

Si un buffer est libre, ce qui est indiqué par l'attribut 1, les deux autres attributs sont sans signification.

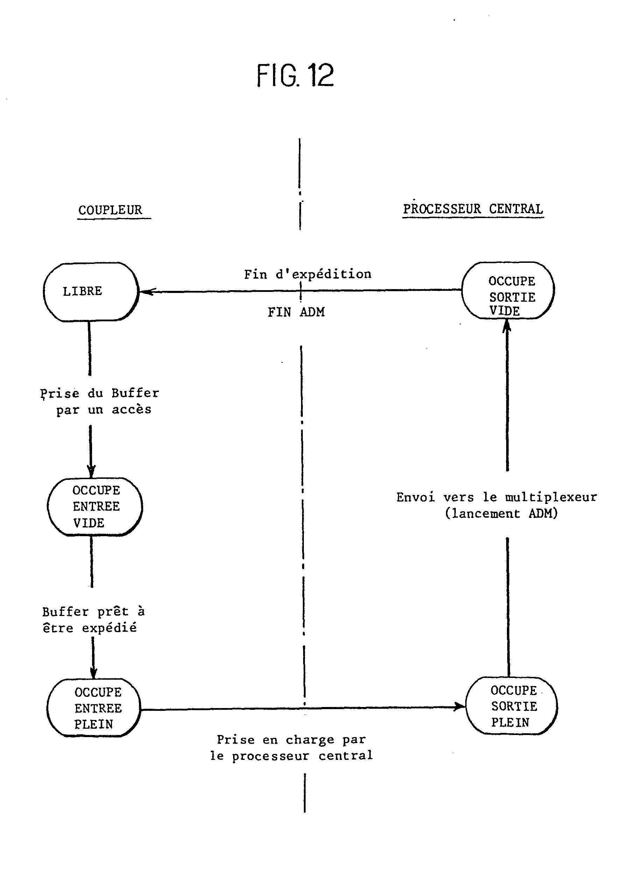

La Fig.12 montre le diagramme d'état des buffers. On y a distingué, à gauche, la zone traitée par le coupleur de la zone traitée par le processeur central, à droite.

L'état LIBRE constitue l'état d'attente, pendant lequel le buffer est non actif.

L'état OCCUPE – ENTREE – VIDE – signifie que le buffer est affecté à un accès, et que son remplissage est en cours. Le terme «vide» n'est donc pas à prendre dans son acception habituelle.

L'état OCCUPE – ENTREE – PLEIN signifie que le paquet DIDON qu'il contient est prêt pour l'expédition, notamment que, dans son en-tête, l'indice et le format sont mis à jour et que les conditions de contrôle de flux ont été vérifiées. Cet état est le plus important car il constitue l'interface entre le coupleur et le processeur central.

L'état suivant, OCCUPE – SORTIE – PLEIN traduit la prise en charge du buffer par le processeur central, lequel transmet des «invitations à émettre» (en anglais: polling) aux coupleurs. Lorsque les conditions le permettent, le processeur central MPC lance ensuite l'échange ADM, c'est-à-dire à accès direct à la mémoire, entre la mémoire MCx du coupleur et la mémoire MTP du multiplexeur MX, faisant passer l'état du buffer à l'état OCCUPE – SORTIE – VIDE, signifiant qu'un échange ADM est en cours. A la fin de l'échange ADM, le buffer est libéré (état LIBRE) et est ainsi prêt pour un nouveau remplissage.

L'octet d'état du buffer est complété par un numéro de page sur 4 bits. Il indique dans quelle page de 64 Koctets se trouve le buffer. Un champ d'adressage de 1 Moctet est donc possible; toutefois un buffer ne peut se trouver à cheval sur 2 pages de 64 Koctets.

Il est nécessaire de pouvoir stocker les états instantanés des buffers. Il faut aussi connaître l'adresse réelle des buffers pour l'indiquer au circuit CADM.

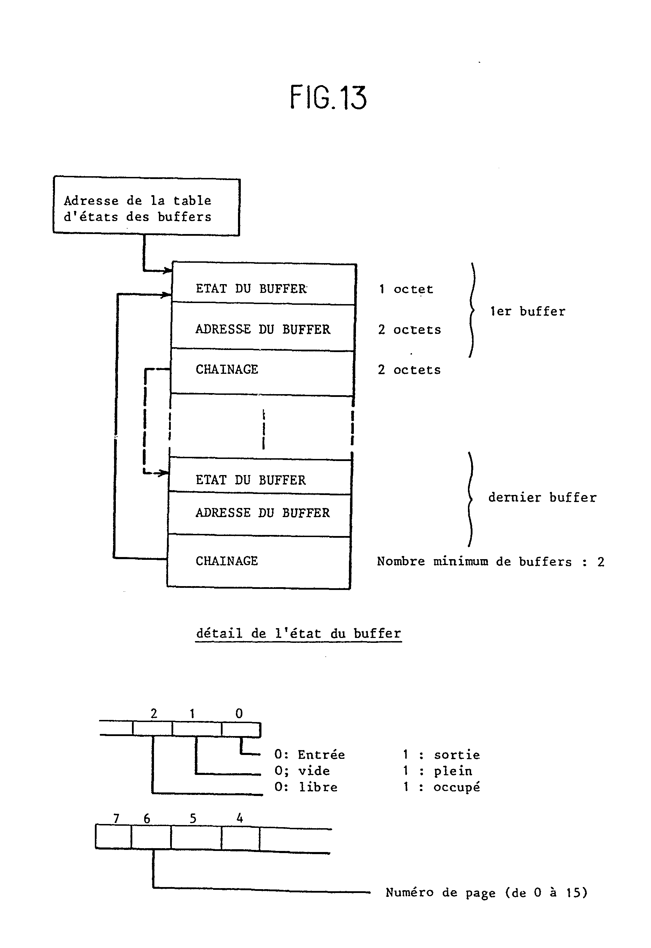

Dans la table de dialogue, Fig.10, il est prévu une table des adresses des états des buffers. En pratique, cette table, illustrée à la Fig.13, est constituée de zones qui se répètent en nombre égal au nombre des buffers gérés par le coupleur concerné.

Dans une zone, Fig. 13, se trouvent:
- l'état du buffer, occupant un octet,
- l'adresse du buffer, occupant 2 octets,
- une adresse de chaînage correspondant à l'adresse de l'état du buffer suivant, occupant 2 octets.

Etant donné le chaînage, le processeur central MPC n'a pas à connaître le nombre de buffers utilisés par le coupleur concerné.

Les différentes zones se trouvent, comme la table de dialogue et l'image du contexte, dans la mémoire commune MCx, accessible par le processeur central MPC. Elles peuvent, étant donné le chaînage, être conjointes ou non.

Pour assurer un fonctionnement optimal du multiplexeur, le nombre minimal de buffers est égal à 2, afin qu'un paquet soit toujours prêt au moment de la fin de l'échange à accès direct mémoire ou ADM.

En anticipant sur la suite de la description, il faut noter que le comportement du coupleur pour ce qui est du mode transfert est très simple.

Pour éviter les débordements, la règle consiste à rechercher un buffer libre par scrutation des états des différents buffers en suivant les 2 règles suivantes:

– si le buffer est LIBRE: le prendre pour affectation à un des accès.

– si le buffer est NON LIBRE: attendre sa libération, car il s'agit du cas de saturation.

A l'initialisation, tous les buffers doivent être mis à l'état LIBRE.

On va maintenant décrire les règles de prise en compte des initialisations.

Chaque processeur doit pouvoir s'initialiser, en particulier, à la mise sous tension. Le processeur central MPC règne en maître absolu du système, surtout au moment de l'initialisation générale.

Deux niveaux d'initialisation sont définis comme suit:

– Initialisation niveau 1, provoquée par un RESET du multibus, soit par une commande de type 01,

– Initialisation niveau 2, provoquée par l'envoi d'une commande de type 02, c'est le cas d'un changement de contexte.

Chronologiquement, les 2 niveaux se suivent dans l'ordre indiqué.

Le comportement de chaque coupleur est le suivant:

– sur une initialisation de niveau 1: le coupleur cesse toute activité, initialise sa table de dialogue, initialise ses variables internes, c'est-à-dire celles qui ne dépendent pas du contexte local. Après quoi, il valide la commande, par le bit $b_7$ du mot de commande, et se met en attente d'une commande de type 02, toute autre commande devant être ignorée.

– sur une initialisation de niveau 2: le coupleur initialise les variables qui dépendent du contexte local, qui est maintenant disponible, et se place en activité normale.

On va maintenant décrire le logiciel prévu dans le processeur central MPC, ce logiciel étant appelé dans la suite «logiciel central».

Les fonctions du logiciel central sont multiples et comprennent:

– l'initialisation de l'ensemble du point d'accès,

– la scrutation des coupleurs et le multiplexage,

– la surveillance des voies sortantes,

– le dialogue avec l'opérateur.

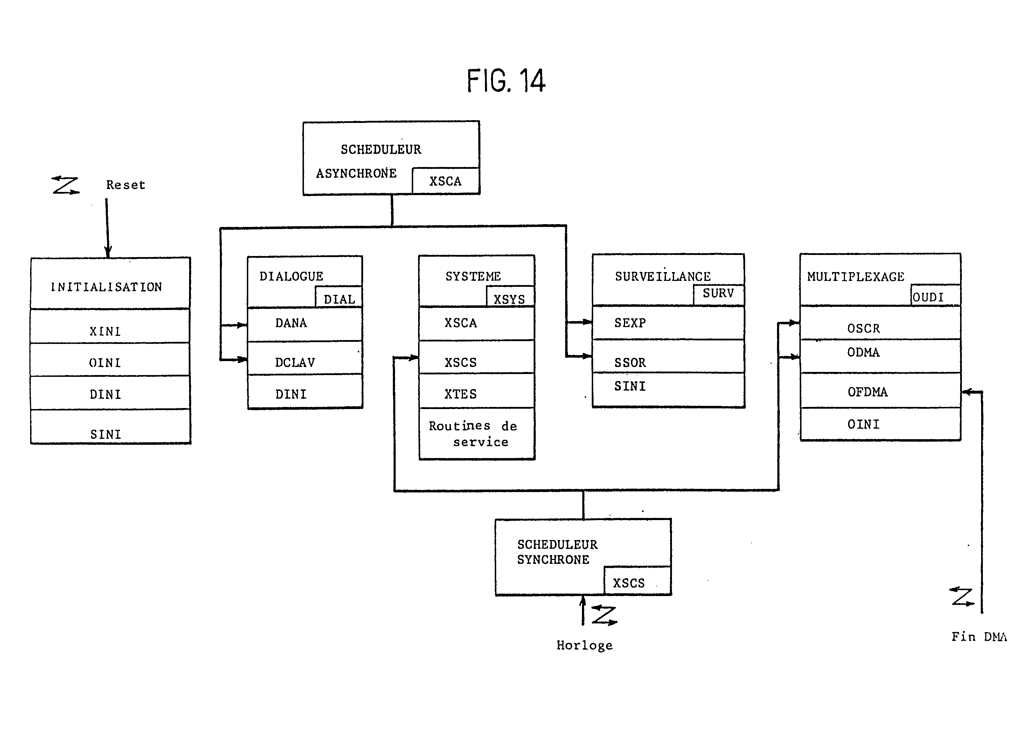

Les modules correspondant à ces diverses tâches sont rassemblés dans le synoptique général de la Fig. 14. Chaque module est constitué d'un certain nombre de processus. Parmi ces processus, le processus d'initialisation permet à chaque module de préparer ses variables internes et d'initialiser les éléments périphériques qui sont sous sa responsabilité conformément au principe de l'initialisation décentralisée.

Ainsi, en pratique, l'entité de sous-programme est le processus. Un processus peut être lancé de trois manières différentes:

– par un autre processus dit «appelant»,

– par le schéduleur synchrone XSCX, ou

– par le schéduleur asynchrone XSCA.

L'ensemble des tâches à réaliser par le programme nécessite un lancement cyclique des processus selon deux modalités:

– le lancement synchrone, avec une période fixe donnée par une horloge, de processus ayant des impératifs de temps réel, ce qui concerne essentiellement la fonction multiplexage proprement dite, qui doit être activée «à heure fixe» de manière à garantir un débit minimal en sortie quelle que soit la charge du processeur central et la fonction gestion des temporisations,

– le lancement asynchrone dans lequel le schéduleur asynchrone XSCA agit en tâche de fond, c'est-à-dire qu'il lance ses processus pendant les périodes d'inactivité du schéduleur synchrone XSCS, et il concerne notamment le dialogue opérateur et la surveillance des voies sortantes.

Dans la Fig. 14, on a montré, en plus des schéduleurs XSCA et XSCS, un module système XSYS, un module de multiplexage OUDI, un module de surveillance SURV et un module de dialogue DIAL, plus un ensemble «INITIALISATION» dans lequel sont rassemblés les processus d'initialisation XINI, OINI, DINI et SINI relatifs aux différents modules.

Les processus du module système XSYS sont résumés ci-après, en distinguant, pour chaque processus, le type, le mode d'appel et la ou les fonctions:

XINI – Processus d'initialisation du point d'accès,

– type: sous-programme,

– mode d'appel: interruption de remise à zéro «Reset» par l'opérateur,

– Fonctions:

– initialisation des variables du point d'accès,

– initialisation des périphériques,

– lancement des processus d'initialisations des autres modules,

– lancement des commandes d'initialisations vers les coupleurs,

– lancement du schéduleur asynchrone XSCA.

XSCA – Schéduleur asynchrone, lequel est également schématiquement représenté, hors de XSYS, pour faciliter la compréhension de la description.

Type: tâche de fond,

Mode d'appel: aucun,

Fonction: lancement des processus asynchrones.

XSCS – Schéduleur synchrone, XSCS, également représenté à part,

Type: sous-programme,

Mode d'appel: interruption horloge,

Fonction: lancement des processus synchrones.

XTES – Gestion des temporisations

Type: processus,

Mode d'appel: schéduleur synchrone,

Fonction: gestion de toutes les temporisations du point d'accès, dont la liste est donnée ci-dessous:

1 voyant RUN processeur
2 voyant de saturation
3 flag de surveillance
4 affichage voyants
5 bouclage commande opérateur
6 envoi de l'heure aux coupleurs

Il est rappelé qu'une temporisation est définie par:

– une valeur de référence,
– une valeur courante, et
– un état.

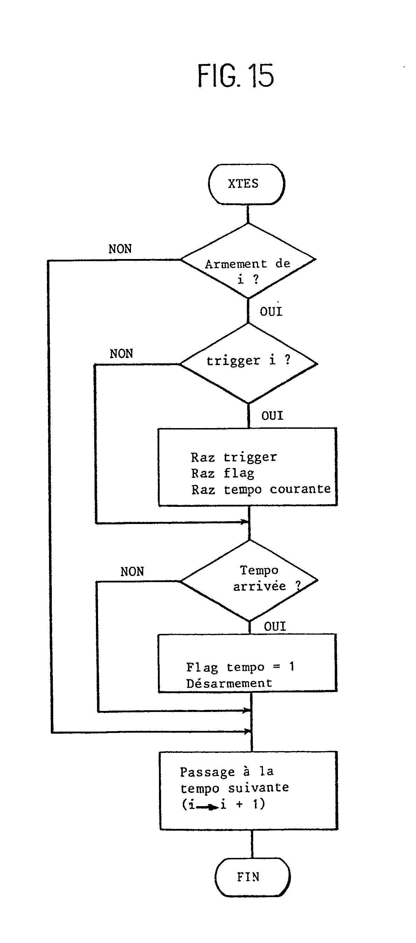

Le processus XTES incrémente les valeurs courantes et positionne l'état à «temporisation arrivée» lorsque la valeur courante a atteint la valeur de référence. Tout autre processus peut armer une temporisation quelconque, c'est-à-dire la lancer, ou synchroniser une temporisation quelconque, c'est-à-dire repositionner sa valeur de référence à zéro, que la temporisation soit armée ou pas. L'organigramme de la Fig. 15 illustre le processus XTES.

En outre, dans la case notée «Routines de service», le module XSYS contient une série de sous-programmes de service défninis ci-dessous:

XCOM – Envoi des commandes vers un coupleur

Mode d'appel: processus appelant, qui définit le numéro de coupleur, le numéro de commande et les conditions de la commande.

Pour le type de retour après compte-rendu, XCOM attend l'acquittement du coupleur avant de rendre la main au processus appelant.

XCPTR – Lecture de compte-rendu de commande d'un coupleur.

XCPET – Lecture de l'état de fonctionnement d'un coupleur.

XEXPA – Génération de la table des identificateurs expansée (XTvoi).

On rapelle que, dans les contextes, les identifications ou numéros de voies se présentent sous forme condensée:

X    Y
Z    U

où U représente le numéro du coupleur gérant la voie XYZ.

Pour faciliter la gestion de ces identificateurs, il est préférable d'utiliser une table dite expansée XTvoi, où ils se présentent sous la forme:

X
Y
Z

XEXPA va lire dans le contexte général en cours, la liste des identificateurs et la duplique, sous forme expansée, dans XTvoi.

XCTX – Chargement d'un contexte

XCNTX est la zone, variable, du contexte en cours à un instant donné. XCNT1, XCNT2, etc., sont des zones, constantes, de contextes, parmi lesquels on peut choisir. Le sous-programme XCTX va chercher une de ces zones pour la recopier dans la zone XCNTX.

XEFEN – Egalisation des fenêtres des deux trames

Dans le cas normal d'utilisation de DIDON, on utilise une fenêtre identique pour les deux trames TV. XEFEN assure cette identité en dupliquant l'état de la trame impaire dans la trame paire. Ainsi, il n'est pas nécessaire de programmer la trame paire, puisque celle-ci peut être déduite de la trame impaire par lancement du sous-programme XEFEN.

XMOV – Transfert d'une zone mémoire.

XFIL – Remplissage d'une zone mémoire par une valeur fixe.

XHAMB – Décodage Hamming.

XHBCD – Conversion Hexadécimal/BCD.

XBCDB – Conversion BCD/Binaire, avec résultat sur 16 bits.

XMUL – Multiplication d'un byte avec un double byte.

XDIV – Division d'un double byte avec un double byte.

XRII – Recherche de l'indice d'une voie.

Les voies sont repérées par leur identificateur XYZ. Toutes les tables du système relatives aux voies sont rangées dans le même ordre, de sorte qu'à l'intérieur du programme, on peut définir les voies par leur indice, ou index, dans ces tables.

Le module de multiplexage remplit, en fait, la fonction de base du point d'accès. Ce module a deux types d'activité:

– la scrutation des coupleurs, et
– le lancement des échanges DMA du multiplexeur MX.

Il est constitué de quatre processus:

OINI – Processus d'initialisation

Mode d'appel: processus appelant

Sa fonction consiste, outre l'initialisation des variables internes du module, à traiter l'initialisation du multiplexeur, c'est-à-dire:

– le positionnement du registre de commande,
– l'initialisation de l'ADM, et
– l'initialisation de la fenêtre.

OSCR – Scrutation des tampons

Type: processus

Mode d'appel: Schéduleur synchrone

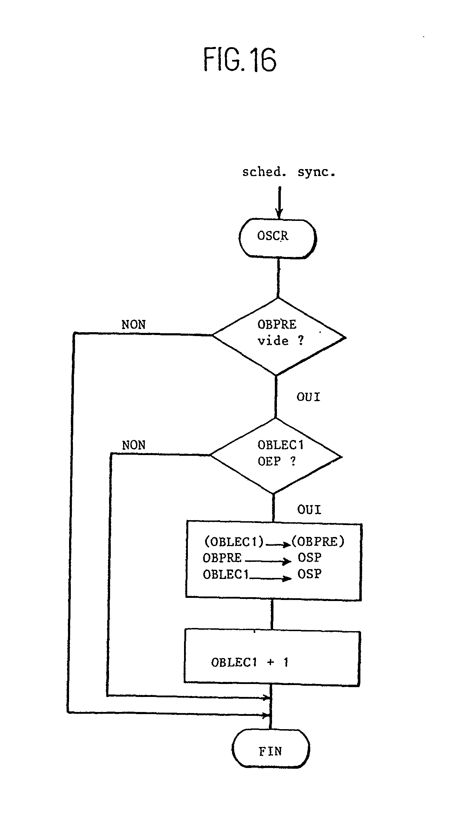

Sa fonction consiste à scruter les tampons des coupleurs afin d'en détecter un qui soit plein, comme l'indique l'organigramme de la Fig. 16. Dans ce cas, le processus le met dans un état d'attente et mémorise notamment son adresse. Ce tampon en état d'attente sera retraité par le processus ODMA.

ODMA – Expédition des paquets

Type: processus

Mode d'appel: schéduleur synchrone.

Sa fonction consiste à regarder si:
1) un tampon est en attente, par OSCR,
2) le DMA a terminé l'échange précédent,
3) le multiplexeur est en état d'accepter un paquet.

Au cours de ce sous-programme, trois tables sont consultées: une table OBLEC dans laquelle sont mémorisées les adresses des paquets dans les différents coupleurs, une table OBPRE dans laquelle est mémorisée l'adresse du tampon qui a été mis en état d'attente par OSCR, et une table OBSOR dans laquelle est mémorisée l'adresse du tampon qui a été mis en expédition par ODMA.

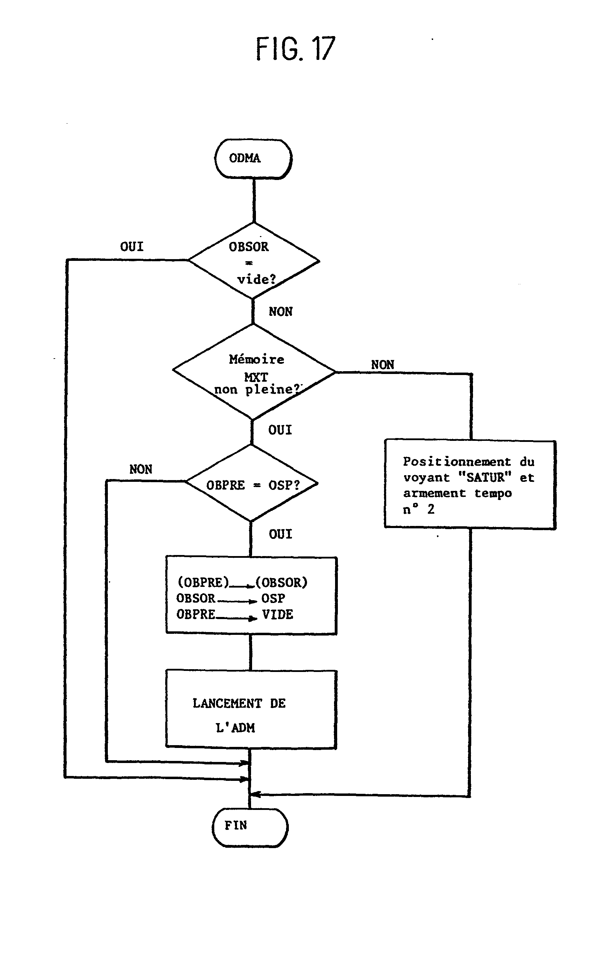

A la suite de ces tests, illustrés dans l'organigramme de la Fig. 17, s'ils sont positifs, ODMA lance l'échange ADM. De plus, ODMA teste l'état «mémoire pleine» du multiplexeur MX et, au besoin, actionne le voyant SATUR.

En pratique, l'échange ADM, mentionné ci-dessus, implique la transmission par le processeur central MPC au circuit CADM du multiplexeur MX de l'identité du coupleur Cx où un tampon a été trouvé en attente et de l'adresse, trouvée dans ce tampon en attente, du buffer $A_i$ ou $B_i$ de MCx dans lequel se trouve le paquet à transférer dans MTP. On décrira, dans la suite, en relation avec le logiciel d'un coupleur, comment un tampon est mis en attente.

OFDMA – Fin d'échange ADM
Type: sous-programme,
Mode d'appel: interruption.

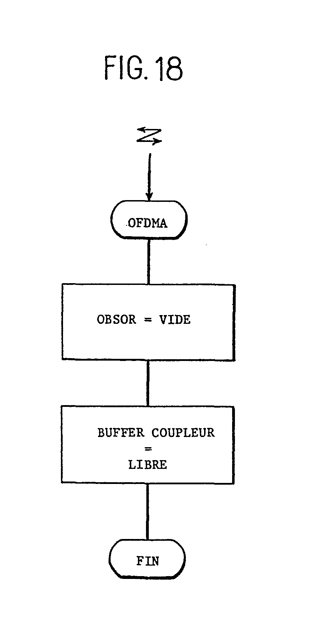

Sa fonction consiste, quand l'échange ADM est terminé, à libérer le tampon du coupleur qui était en cours d'expédition. L'organigramme correspondant est montré à la Fig. 18.

Le module de surveillance SURV est activé par le schéduleur asynchrone. Il s'effectue donc sous forme de tâche de fond.

Sa fonction est de surveiller les tampons qui sont expédiés par le multiplexeur MX, c'est-à-dire par le module OUDI, et de noter les voies qui émettent effectivement des paquets.

Les voies sont repérées par leur identificateur XYZ, lu dans le tampon. L'indice de la voie permet, éventuellement, de retrouver le numéro du coupleur et le numéro d'accès dans le coupleur, notamment dans le but de les afficher à l'aide de voyants adéquats.

Il faut noter qu'il s'agit d'une mesure statistique, car tous les paquets ne sont pas analysés. Dans la pratique, on constate que le nombre d'échantillons relevés est suffisant pour repérer à coup sûr l'activité des voies. Le module SURV gère des tables SSURV, SNI, SNTOT, SNPA dans lesquelles sont respectivement mémorisés les résultats des prélèvements, à savoir la présence d'une voie en ligne, le nombre d'échantillons pour chaque voie, le nombre d'échantillons total, et le nombre total de paquets expédiés. Ces dernières valeurs permettent de calculer une évaluation du débit de chaque voie, pour en fournir l'indication à l'opérateur.

SEXP – Exploration des tampons en sortie,
Type: processus,
Mode d'appel: schéduleur asynchrone.

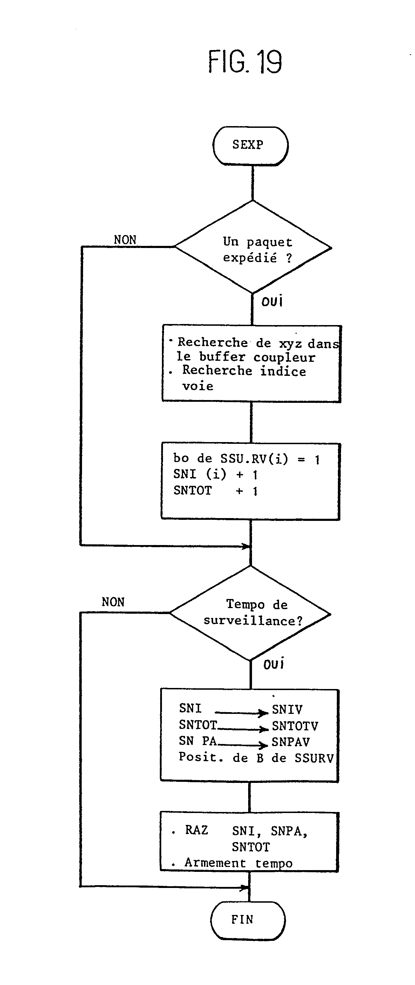

L'organigramme de la Fig. 19 illustre le déroulement du processus SEXP. Sa fonction consiste à regarder si un paquet a été expédié. Dans le cas positif, il recherche XYZ dans l'en-tête du paquet, calcule l'indice de voie au moyen de XRII et positionne les tables de SURV pour la voie concernée, c'est-à-dire:

– le bit Bo de SSURV, flag de voie active,
– SNI(i) incrémentation du nombre de prélèvements par voie,
– SNTOT incrémentation du nombre total de prélèvements.

Sa fonction consiste aussi à tester une temporisation de surveillance et, dans le cas d'un test positif, à mémoriser les résultats des mesures précédentes. A cet effet, l'ensemble des tables de SURV (SNI, SNTOT, SNPA) est doublé par les tables SNIV, SNTOTV, SNPAV, dans lesquelles sont emmagasinés les résultats de l'échantillon précédent. Ces derniers ont donc des valeurs figées et interprétables à tout moment, contrairement aux premières qui évoluent à chaque instant.

SSOR – Sortie des voyants,
Type: processus,
Mode d'appel: schéduleur asynchrone.

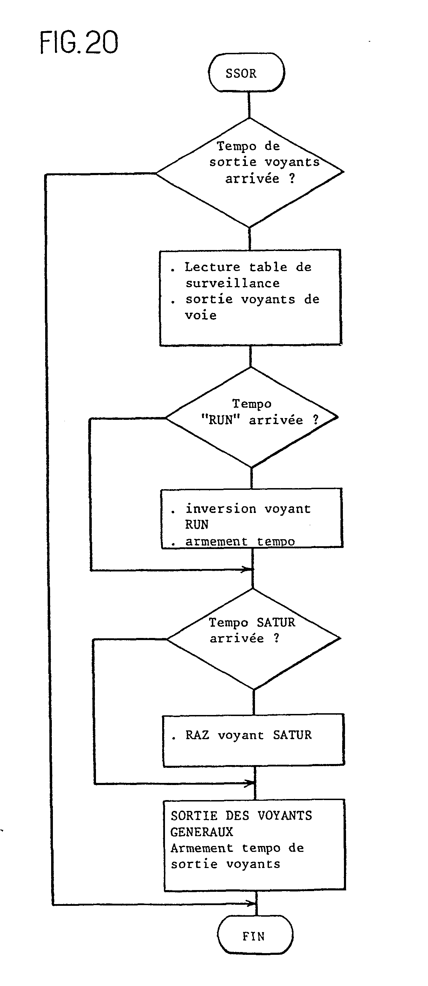

L'organigramme de la Fig. 20 illustre le déroulement de ce processus. Sa fonction consiste à lire le résultat des mesures statistiques de SEXP par l'intermédiaire de la table SSUR et, en conséquence, à afficher les voyants de voies. En fait, ces voyants représentent des accès physiques de coupleurs, la correspondance étant faite à l'aide des informations contenues dans les contextes voie.

De plus, il gère également les voyants généraux dont les états sont mémorisés dans la variable XVOYG. Parmi ceux-ci, on distingue:

– le voyant RUN qui clignote sous la commande de SSOR avec une temporisation adéquate,
– le voyant INSERT DANS L'IMAGE qui est géré par le processus OINI, initialisation du multiplexeur, et
– le voyant SATUR géré par ODMA au moment de l'expédition des paquets et par SSOR pour sa remise à zéro au bout d'un certain temps.

Le module de dialogue DIAL assure l'interface avec l'opérateur par l'intermédiaire de l'organe de commande OCC comportant un clavier et afficheurs hexa. Les voyants leds d'activité des voies sont quant à eux directement gérés par le module de surveillance SURV. L'action de l'opérateur peut se situer à 3 niveaux de complexité, selon le type d'exploitation, et selon la formation de l'exploitant:

– niveau 0: initialisation du système, c'est la manœuvre la plus simple qui soit; elle consiste à remettre l'appareil dans un état de base fixé et connu.

– niveau 1: choix d'un contexte, l'ensemble des paramètres du système est regroupé dans un contexte. Sont présents en mémoire morte 10 contextes différents, parmi lesquels l'opérateur peut choisir un contexte, dit contexte en cours. A l'initialisation (niveau 0) c'est le contexte 0 qui est pris comme contexte en cours.

– niveau 2: modifications du contexte en cours, un contexte ayant été préalablement choisi (niveau 1), l'opérateur peut, par des commandes spécifiques, modifier tel ou tel paramètre à l'intérieur de ce contexte.

Le logiciel coupleur est implanté dans la mémoire morte ROMx du coupleur Cx. Les tâches imparties à ce logiciel coupleur sont les suivantes:

– la lecture des caractères arrivant sur les 8 accès CAS1 à CAS4 et CAP1 à CAP4 et mise en paquets,

– l'expédition des paquets des huit voies numériques vers le multiplexeur MX,

– la régulation des débits des huit voies,

– la gestion du protocole d'interface avec le processeur central MPC.

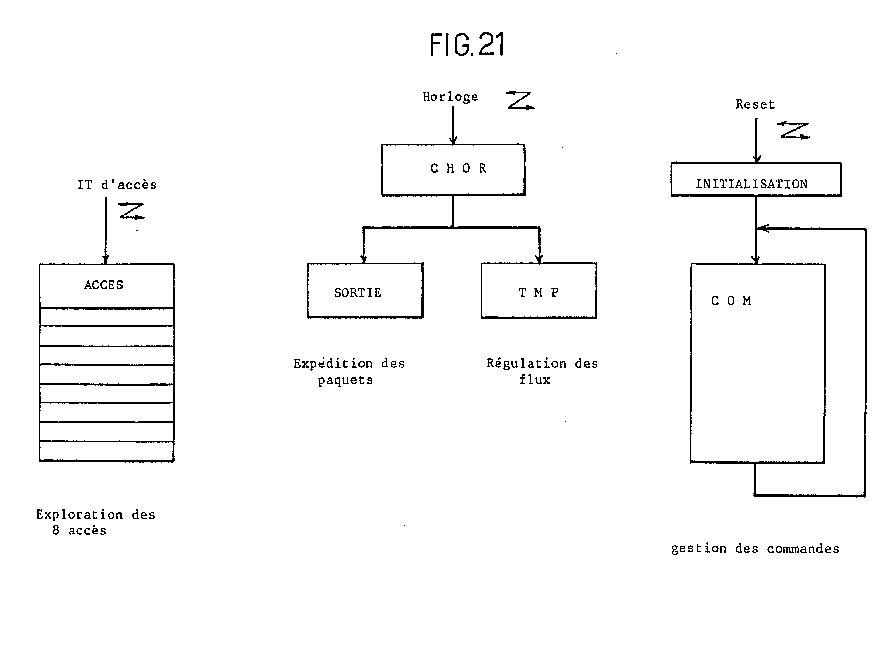

La structure du logiciel coupleur, qui est illustrée à la Fig. 21, présente des analogies avec celle du logiciel central, mais est un peu plus simple. Il s'agit d'une programmation en modules bien identifiés et appelés par un schéduleur.

Quatre groupes de modules constituent l'essentiel du programme:

– un module ACCES qui assure la lecture des informations en entrée et leur mise en paquets, ce module étant, en fait, constitué de huit sous-modules, tous identiques, gérant chacun un accès et qui sont activés par interruptions,

– un module SORTIE, chargé de scruter les buffers de paquets des modules ACCES et d'en décider l'expédition selon un certain nombre de critères,

– un module de régulation des flux TMP, dont le rôle consiste à gérer des temporisations d'envoi de paquets pour chaque voie,

– un module COM qui assure la gestion des commandes venant du processeur central MPC.

Le module ACCES est activé par les interruptions venant des organes d'entrée des huit accès. Les modules SORTIE et TMP sont appelés à période fixe par un schéduleur synchrone CHOR, lui-même commandé par une horloge.

Le module COM a le statut de tâche de fond et, de ce fait, utilise le temps machine disponible quand les autres tâches ont été effectuées.

La plus grande partie des données est structurée en correspondance avec les huit accès à gérer.

On trouve d'abord les buffers de paquets: deux par accès appelés $A_i$ et $B_i$, puis un buffer de sortie appelé C. Le buffer $A_i$ sert de buffer de remplissage, le buffer $B_i$ sert de buffer tampon d'attente d'expédition.

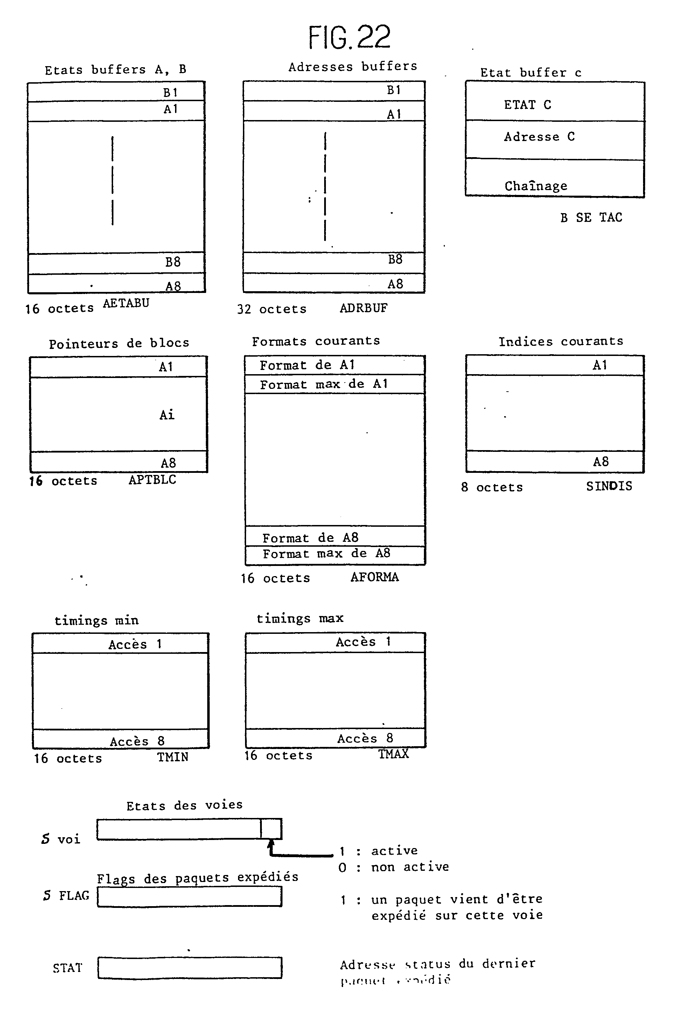

Les autres données sont des tables de variables organisées en huit cases pour les huit accès. On trouve en particulier, Fig. 22:

– une table AETABU, Fig. 22, des états des buffers $A_i$ et $B_i$ où chacun des seize buffers $A_i$ et $B_i$ est caractérisé par sept éléments: prioritaire ou non, temps minimal atteint temps maximal atteint, vide, partiellement plein, plein, type A ou B, ces états étant analysés au moment de la décision d'expédition,

– une table ADRBUF des adresses des buffers,

– une table APTBLC des pointeurs de blocs de données des paquets,

– une table AFORMA des formats courants des voies,

– une table SINDIS des indices courants des voies, et

– deux tables TMIN et TMAX des temporisateurs d'expédition.

On va maintenant décrire les différents modules du logiciel coupleur.

D'une manière générale, la notion de processus n'existe pas, seul le mode COM est divisé en trois parties: CINI, CHOR et POLL, qui sont décrites ci-dessous:

CINI – Initialisation du programme coupleur,

Type: processus,

Mode d'appel: interruption sur RESET ou appel par POLL.

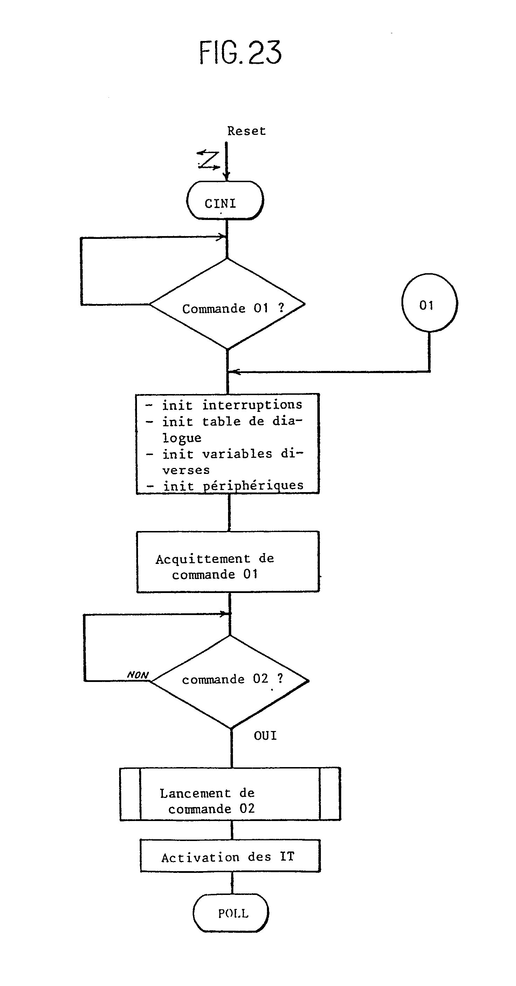

Ce processus est illustré dans l'organigramme de la fig. 23. Sa fonction consiste à assurer la gestion du protocole d'initialisation avec le processeur central MPC, c'est-à-dire la réception de la commande 01, puis de la commande 02; ensuite CINI effectue les initialisations des périphériques et des tables de variables.

Ce module peut être activé soit à la mise sous tension RESET, soit en cours de fonctionnement normal par le processus de gestion des commandes lorsque celui-ci reçoit une commande 01.

CHOR – Schéduleur,

type: processus,

mode d'appel: interruption horloge.

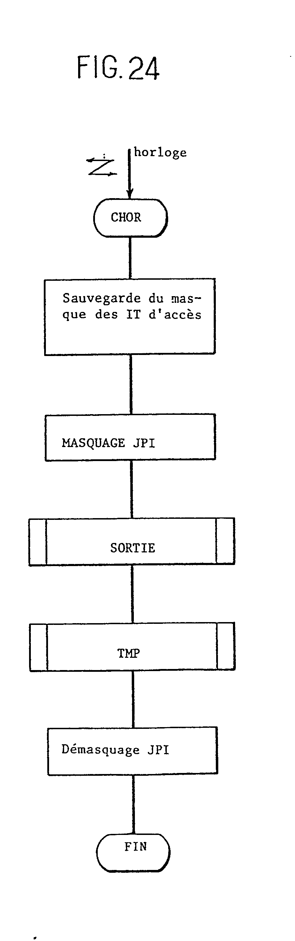

Ce processus est illustré à la Fig. 24. La fonction de ce mini-schéduleur consiste à lancer les modules SORTIE et TMP successivement. Pendant l'exécution de ces deux modules, les accès parallèles CAP1 à CAP4 sont inhibés de façon à ne pas retarder les exécutions de l'expédition et de calcul de temps. Par contre, les entrées série, non-asservies, CAS1 à CAS4 ne peuvent être masquées sous peine de risquer la perte d'octets. Toutefois, cela ne représente pas une véritable gêne étant donné les débits relativement faibles de ces accès: au maximum une entrée toutes les millisecondes.

POLL – scrutation des commandes du processeur central MPC,

type: tâche de fond,

mode d'appel: aucun (boucle).

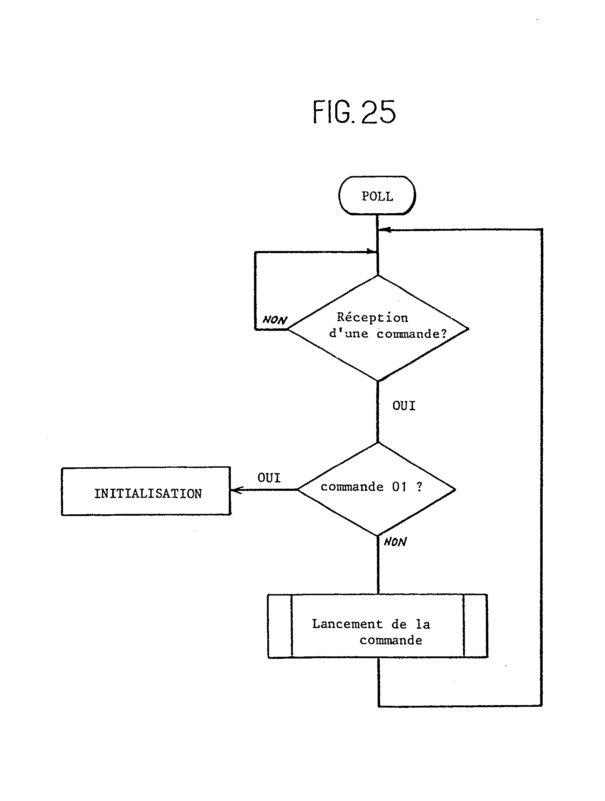

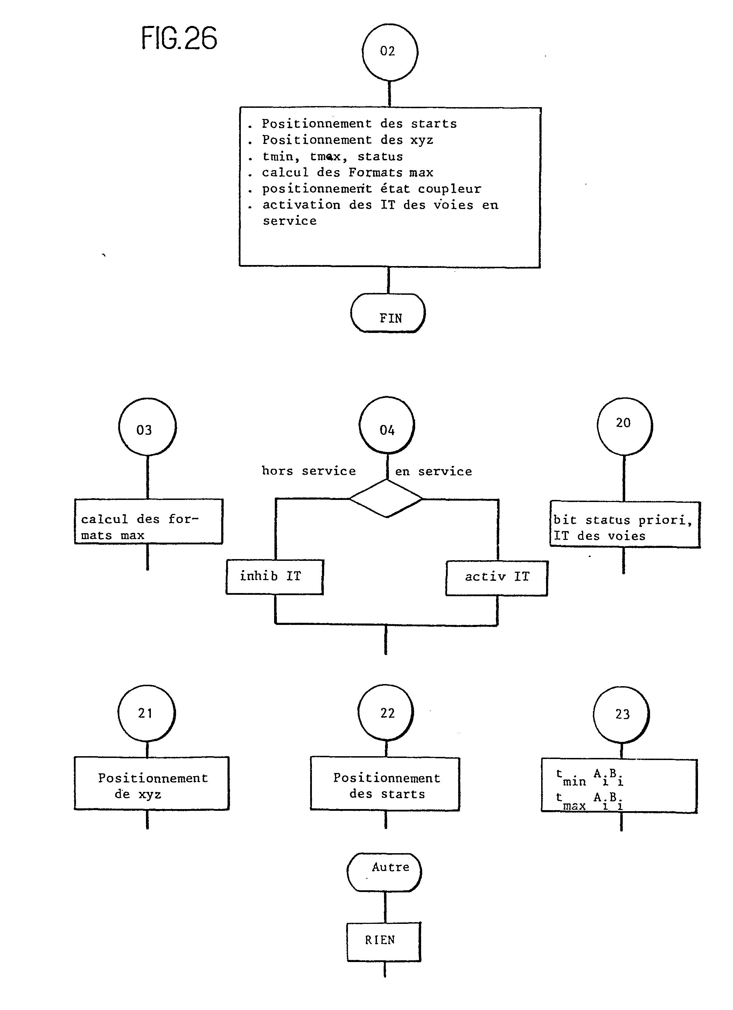

Ce sous-programme est illustré à la Fig. 25. Une de ses fonctions consiste à se contenter d'explorer la table de dialogue avec le processeur central MPC. A la détection d'une commande 01, il effectue un saut en procédure d'initialisation (CINI). Dans les autres cas, il lance la routine correspondant à la commande reçue. Les organigrammes de ces routines sont illustrés à la Fig. 26.

Routine des commandes ,

type: sous-programme

mode d'appel: processus appelant POLL.

Les fonctions des routines consistent à remplir les tâches spécifiques correspondant à chacune des commandes traitées.

– commande 02: changement de contexte.

Elle conduit pratiquement à réinitialiser toutes les tables du système.

– commande 03: modification des formats maximaux.

Elle sert à la mise à jour de la table AFORMA.

– commande 04: mise en service/arrêt du coupleur.

L'arrêt du coupleur est réalisé très simplement par masquage de toutes les interruptions. A noter que, dans cet état, le coupleur continue de recevoir les commandes éventuelles du processeur central MPC.

– commande 20: mise en route/arrêt d'une voie.

Il suffit de masquer/démasquer l'interruption correspondante.

– commande 21: modification des identificateurs de voie.

On modifie l'en-tête des paquets dans les buffers $A_i$ et $B_i$.

– commande 22: modification des STARTS On modifie l'en-tête comme pour la commande 21.

– commande 23: modification des débits.

On modifie les tables TMIN et TMAX donnant la valeur des temporisations pour chaque voie.

Toute autre commande est ignorée.

Les autres modules sont décrits ci-après.

ACCES – lecture d'un octet sur un des accès CAS1 à CAS4 ou CAP1 à CAP4,

type: module,

mode d'appel: interruption.

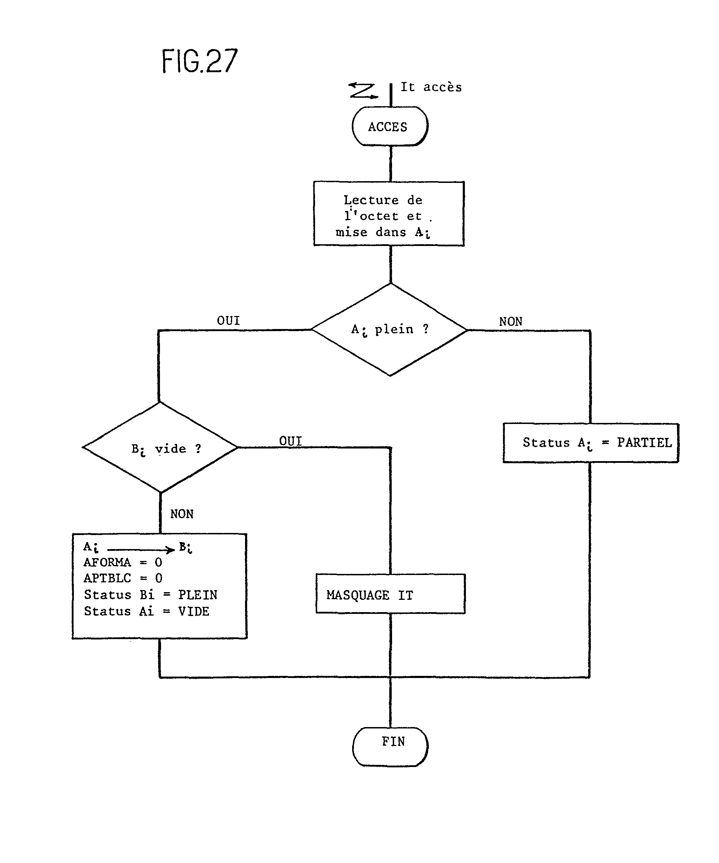

L'organigramme de la Fig. 27 illustre le déroulement de ce module. Ses fonctions sont la lecture de l'octet et son stockage dans le buffer $A_i$. Il gère le passage dans $B_i$ quand $A_i$ est plein. Pour cela, il modifie les états de $A_i$ et $B_i$. En outre, en cas de saturation, il inhibe l'entrée par masquage de l'interruption, celle-ci étant réactivée au moment de l'expédition d'un paquet pour cette voie. Le module ACCES est la partie la plus critique du logiciel puisqu'il travaille au niveau octet. Il a été dupliqué huit fois pour supprimer les adressages indexés, très longs quand on utilise un microprocesseur INTEL 8085. Il a, de plus, été optimisé au maximum pour limiter le nombre d'instructions exécutées dans la branche la plus fréquente du module.

SORTIE – expédition des paquets,

type: module,

mode d'appel: schéduleur.

Ce module a deux fonctions distinctes: d'abord analyser les états des buffers $A_i$, $B_i$, afin de décider de la nécessité d'expédier ou non un paquet; ensuite, dans le cas favorable, effectuer le transfert dans le buffer C en vue de l'expédition.

Le choix du buffer à expédier se fait en deux temps. On commence par rechercher un buffer «éligible» prioritaire, bit 0 de l'état; si la recherche est négative, on reprend la scrutation des huit voies pour rechercher un buffer éligible non prioritaire.

On appelle «niveau 1» le niveau de scrutation des prioritaires et «niveau 2» le niveau de scrutation des non prioritaires. A l'intérieur d'un même niveau on scrute successivement le buffer $B_i$ et le buffer $A_i$. Pour chaque nouvelle recherche, c'est-à-dire un nouvel appel du module SORTIE, on commence, en tout état de cause, par scruter le buffer B de l'accès qui suit celui de la dernière expédition. De ce fait, il n'y a pas de priorité entre accès, ces derniers étant scrutés les uns après les autres de manière cyclique.

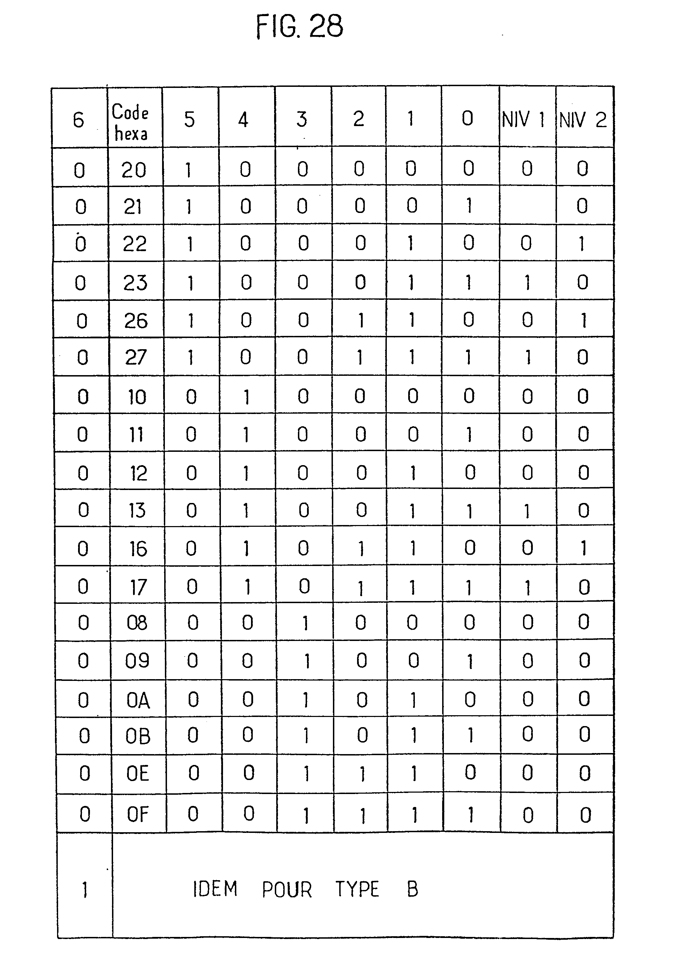

La décision d'expédition se fait par le principe de la table de décision. La table, Fig. 28, est adressée par la valeur de l'état du buffer et on récupère en sortie six signaux qui indiquent si l'expédition est possible au niveau 1 ou 2, ou si l'expédition est impossible.

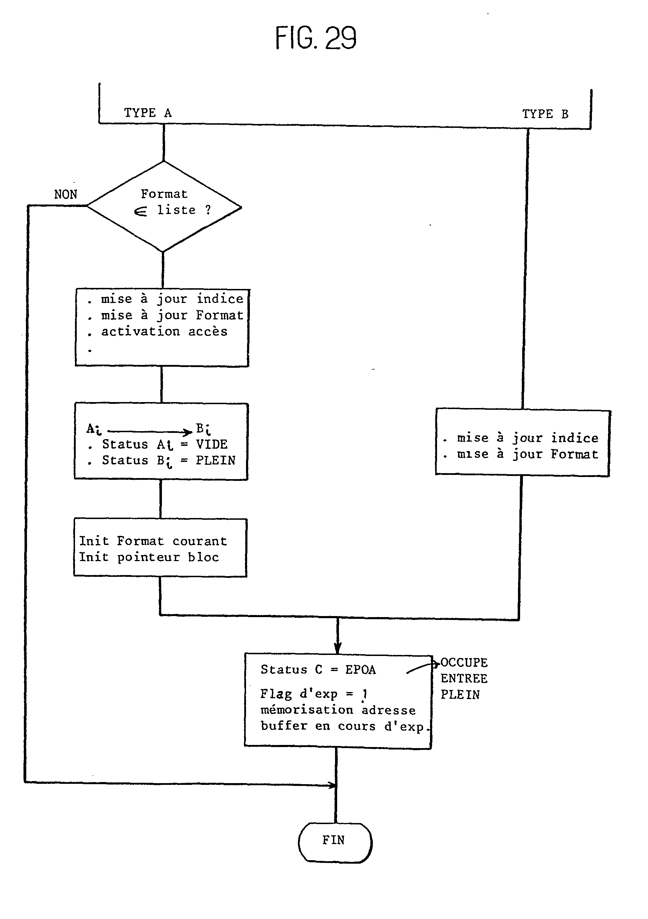

D'autre part on distingue l'expédition d'un $A_i$ de celle d'un $B_i$, dont les signaux sont différents, car, comme décrit ci-après en relation avec l'organigramme de la Fig. 29, le travail à faire n'est pas le même dans les deux cas.

– Cas de l'expédition d'un buffer type B: il suffit dans ce cas de mettre à jour l'indice et le format qui est le format max. car B est forcément plein.

– Cas de l'expédition d'un buffer type A: un tel buffer n'est pas forcément plein, il faut donc vérifier que le format courant appartient à la liste utilisée pour cette voie. On transfère alors $A_i$ dans $B_i$, qui est vide, et on réinitialise les paramètres de $A_i$ en vue de la formation d'un nouveau paquet.

Enfin le processus de préparation de l'expédition se termine par la programmation de l'état du buffer C: état OCCUPE ENTREE PLEIN, et adresse du paquet. Il faut noter que le buffer C est en fait fictif. A chaque instant il représente un des buffers $A_i$ ou $B_i$.

En fait, l'expédition d'un paquet est décidée dans deux cas:

– le buffer est plein et le temps $t_{min}$ entre l'émission de deux paquets est atteint, ou

– le buffer n'est que partiellement plein et le temps $t_{max}$ entre l'émission de deux paquets est atteint.

Il faut toutefois noter que, dans le cas du niveau 1, prioritaire, on expédie le buffer même si $t_{max}$ n'est pas atteint. Cela peut conduire à transmettre un très grand nombre de paquets partiels, mais cela est nécessité par le caractère prioritaire de la voie.

TMP – régulation des flux,

type: module,

mode d'appel: schéduleur.

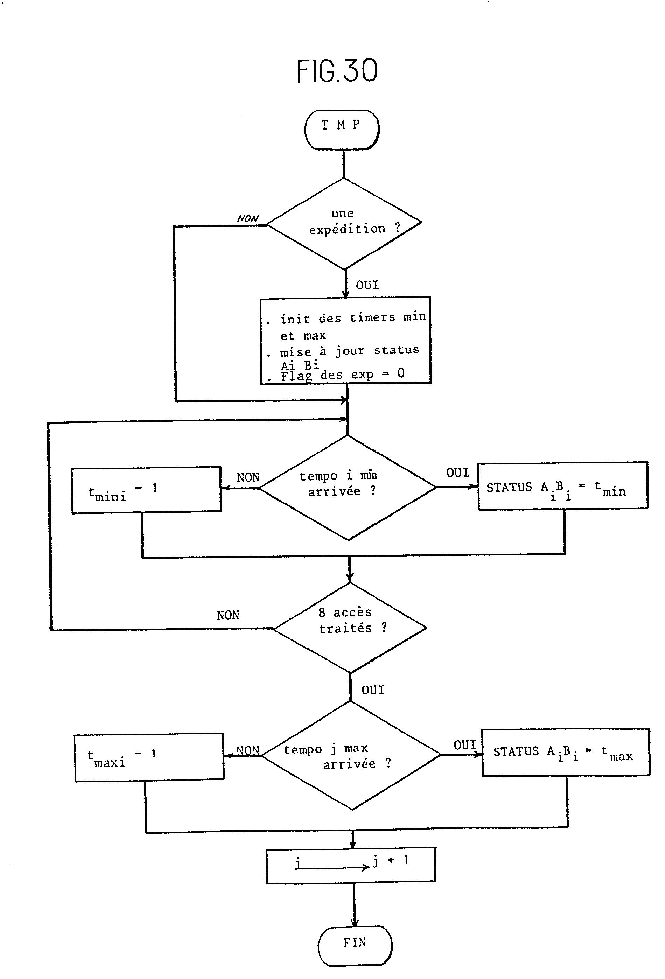

L'organigramme de ce module est illustré à la Fig. 30. Ce module a pour but la gestion des bits $t_{min}$ et $t_{max}$ des états des buffers A et B, ces signaux sont des signaux de temporisation ou temporisateurs. Ils doivent donc être gérés en temps réel grâce à l'aspect synchrone du schéduleur, qui fait que TMP est appelé avec une périodicité constante et connue.

Des compteurs, sous forme de tables $t_{min}$ et $t_{max}$, sont associés à chaque voie et décrémentés par TMP. Lorsque l'une des temporisations est arrivée à terme, on positionne le bit $t_{min}$ ou $t_{max}$ correspondant dans un des états de $A_i$ et $B_i$. La table TMIN constitue donc la base de la régulation des débits, qui se fait donc au niveau paquet.

Il faut noter que cette régulation est en principe parfaite en ce sens que le débit réel d'une source ne dépend pas du débit des autres à un instant donné.

Toutefois il est possible de programmer les voies avec un débit maximal, correspondant à une valeur dit débit maximal, correspondant à une valeur $t_{min} = 0$. Dans ce cas la régulation par TMP ne fonctionne plus. Le partage de la ressource se fait, tant bien que mal, par le biais des priorités d'interruption.

### Revendications

1. Structure d'un point d'accès à un réseau de diffusion de données par paquets comprenant une pluralité de coupleurs (Cx), un multiplexeur (MX) contenant une mémoire tampon (MTP) et une unité de commande centrale (MPC) reliés ensemble par un bus général (MB), chaque coupleur (Cx) étant relié à une pluralité de sources de données, a mémoire tampon (MTP) du multiplexeur MX) étant reliée à un équipement d'émission dudit réseau de diffusion, chaque coupleur (Cx) comprenant une mémoire à double accès (MCx), un microprocesseur (MUPx), une mémoire morte (ROMx), une pluralité de circuits d'accès (CAS1 à CAS4 et CAP1 à CAP4) reliés chacun à une source, un bus local (Bx), dans chaque coupleur (Cx) étant implanté, outre le logiciel de gestion du coupleur, un ensemble de sous-programmes permettant les échanges avec ladite mémoire tampon (MTP), caractérisée en ce que la mémoire de l'unité centrale (MPC) contient une table de connexions décrivant les connexions établies en commutation temporelle entre les coupleurs (Cx) et la mémoire tampon (MTP) ainsi que, pour chaque coupleur (Cx), les sous-programmes d'interconnexions entre ce coupleur (Cx) et les sources de données qui lui sont reliées.

2. Structure de point d'accès suivant la revendication 1, caractérisée en ce que chaque coupleur (Cx) comprend encore un circuit d'accès local (CALx, Fig. 2) entre la mémoire à double accès (MCx) et le bus local (Bx) et un circuit d'accès général (CAGx) entre la mémoire à double accès (MCx) et le bus général (MB), les circuits d'accès local (CALx) et général (CAGx) étant commandés par un circuit de gestion (CGMx) relié au bus général (MB).

3. Structure de point d'accès suivant la revendication 1 ou 2, caractérisée en ce que le multiplexeur (MX) comprend outre la mémoire tampon (MTP), un circuit d'accès d'écriture (CAE, Fig. 3), un convertisseur parallèle/série (P/S), un circuit d'accès direct mémoire (CADM), une mémoire de fenêtre (MF), un circuit de gestion (PROT), un bus local (BMX) et un circuit de gestion (CGMMX) du bus général (MB) commandant le circuit d'accès (CA), la mémoire tampon (MTP) étant organisée en pages dont la taille est ajustable en fonction de la taille des paquets diffusés.

4. Structure d'un point d'accès suivant l'une des revendications 1 à 3, caractérisée en ce que, dans chaque coupleur (Cx), les données reçues des sources associées sont mises en paquets prêts à être transmis et mémorisés dans la mémoire à double accès (MCx) dans laquelle deux buffers ($A_i$, $B_i$) sont réservés pour chaque source, puis le degré de remplissage d'un des buffers ($A_i$) est testé pour le changer en l'autre buffer ($B_i$) quand il est plein, puis l'état des buffers ($A_i$, $B_i$) est exploré suivant un ordre prédéterminé et, selon le résultat de l'exploration, en fonction de niveaux de priorité, un buffer de sortie (C) est informé de l'adresse du buffer ($A_i$ ou $B_i$) du paquet à transférer et mis dans l'état en attente.

5. Structure d'un point d'accès suivant l'une des revendications 1 à 4, caractérisée en ce que l'unité centrale (MPC) explore les états des buffers de sortie (C) des coupleurs (Cx) et, quand un buffer de sortie (C) est trouvé en attente, que le multiplexeur (MX) a terminé un échange précédent et est en état d'accepter un paquet, transmet au circuit (CADM) du multiplexeur (MX) les coordonnées du coupleur (Cx) et de l'adresse lue dans le buffer (C) en attente dans ce coupleur, et l'ordre de procéder au transfert du buffer ($B_i$ ou $A_i$) correspondant à cette adresse dans la mémoire (MTP).

### Patentansprüche

1. Zugriffspunktstruktur eines Verbreitungsnetzes für Datenpakete, umfassend eine Vielzahl von Kopplern (Cx), einen Multiplexer (MX), der miteinander über einen Haupt-Bus (MB) verbunden einen Pufferspeicher (MTP) und eine zentrale Steuereinheit (MPC) enthält, wobei jeder Koppler (Cx) mit einer Vielzahl von Datenquellen verbunden ist, wobei der Pufferspeicher (MTP) des Multiplexers (MX) mit einer Sendeeinrichtung des Verbreitungsnetzes verbunden ist, wobei jeder Koppler (Cx) einen Speicher (MCx) mit zweifachem Zugriff enthält, einen Mikroprozessor (MUPx), einen Festwertspeicher (ROMx), eine Vielzahl von Zugriffsschaltungen (CAS1 bis CAS4 und CAP1 bis CAP4), die jeweils mit einer Quelle verbunden sind, einen örtlichen Bus (Bx), wobei in jeden Koppler zusätzlich zu der Steuer-Software für den Koppler eine Anzahl von Unterprogrammen für den Informationsaustausch mit dem genannten Pufferspeicher (MTP) eingefügt ist, dadurch gekennzeichnet, dass der Speicher der zentralen Steuereinheit (MPC) eine Verbindungstabelle enthält, die die Verbindungen, die beim zeitlichen Umschaltbetrieb zwischen den Kopplern (Cx) und dem Pufferspeicher (MPT) errichtet werden, sowie für jeden Koppler (Cx) die Unterprogramme definiert, die die Verbindungen zwischen diesem Koppler (Cx) und den mit ihm verbundenen Datenquellen steuern.

2. Zugriffspunktstruktur nach Anspruch 1, dadurch gekennzeichnet, dass jeder Koppler (Cx) noch eine örtliche Zugriffsschaltung (CALx, Fig. 2) zwischen dem Speicher (MCx) mit zweifachem Zugriff und dem örtlichen Bus (Bx) und eine allgemeine Zugriffsschaltung (CAGx) zwischen dem Speicher (MCx) mit zweifachem Zugriff und dem Haupt-Bus (MB) enthält, wobei die örtliche Zugriffsschaltung (CALx) und die allgemeine Zugriffsschaltung (CAGx) durch eine Steuerschaltung (CGMx) gesteuert werden, die mit dem allgemeinen Bus (MB) verbunden ist.

3. Zugriffspunktstruktur nach Anspruch 1 oder 2, dadurch gekennzeichnet, dass der Multiplexer (MX) zusätzlich zu dem Pufferspeicher (MTP) eine Schreib-Zugriffsschaltung (CAE, Fig. 3), einen Parallel-Serien-Umsetzer (P/S), eine Speicherschaltung (CADM) mit direktem Zugriff, einen Fensterspeicher (MF), eine Steuerschaltung (PROT), einen örtlichen Bus (BMX) und eine Steuereinheit (CGMMX) für den Haupt-Bus (MB), die die Zugriffsschaltung (CA) steuert, enthält, wobei der Pufferspeicher (MPT) in Seiten organisiert ist, deren Grösse entsprechend der Grösse der verbreiteten Pakete einstellbar ist.

4. Zugriffspunktstruktur nach einem der Ansprüche 1 bis 3, dadurch gekennzeichnet, dass in jedem Koppler (Cx) die von den zugeordneten Quellen empfangenen Daten in Pakete formatiert werden, die fertig zum Aussenden und Speichern in dem Speicher (MCX) mit zweifachem Zugriff sind, in welchem für jede Quelle zwei Puffer ($A_i$, $B_i$) reserviert sind, worauf der Füllungsgrad eines der Puffer ($A_i$) geprüft wird, um auf den anderen Puffer ($B_i$) umzuschalten, wenn er voll ist, worauf dann der Zustand der Puffer ($A_i$, $B_i$) in vorgegebener Reihenfolge abgetastet wird und entsprechend dem Ergebnis der Abtastung und als Funktion der Prioritätspegel ein Ausgangspuffer (C) über die Adresse des das zu übertragende Paket enthaltenden Puffers ($A_i$ oder $B_i$) informiert und in den Wartezustand versetzt wird.

5. Zugriffspunktstruktur nach einem der Ansprüche 1 bis 4, dadurch gekennzeichnet, dass die zentrale Einheit (MPC) den Zustand der Ausgangspuffer (C) der Koppler (Cx) abtastet und – wenn ein Ausgangspuffer (C) im Wartezustand festgestellt wird und der Multiplexer (MX) eine vorherige Umschaltung vollzogen hat und im Zustand für den Empfang eines Pakets ist – zu der Schaltung (CADM) des Multiplexers (MX) die Koordinaten des Kopplers (Cx) und der aus dem wartenden Puffer (C) in diesen Koppler ausgelesenen Adresse sowie die Reihenfolge zur Erzielung der Übertragung von dem zu dieser Adresse gehörenden Puffer ($B_i$ oder $A_i$) in den Speicher (MTP) übermittelt.

## Claims

1. An access point structure for a data packet broadcasting network, comprising a plurality of couplers (Cx), a multiplexer (MX) including a buffer memory (MTP) and a central control unit (MPC) all being interconnected by means of a main bus (MB), each coupler (Cx) being coupled to a plurality of data sources, the buffer memory (MTP) of the multiplexer (MX) being coupled to a transmission equipment of said broadcasting network, each coupler (Cx) including a dual access memory (MCx), a microprocessor (MUPx), a read only memory (ROMx), a plurality of access circuits (CAS1–CAS4 and CAP1–CAP4) being each coupled to a data source, a local bus (Bx), in each coupler (Cx) being implanted in addition to the coupler control software a set of subroutines for exchanging information with said buffer memory (MTP), characterized in that the memory of the central control unit (MPC) stores a connection table defining the connections established in time-division switching mode between the couplers (Cx) and the buffer memory (MTP) together with, for each coupler (Cx), the subroutines for controlling interconnections between this coupler (Cx) and the data sources connected thereto.

2. An access point structure according to claim 1, characterized in that each coupler (Cx) further includes a local access circuit (CALx, Fig. 2), between the dual access memory (MCx) and the local bus (Bx) and a general access circuit (CAGx) between the dual access memory (MCx) and the main bus (MB), the local access circuit (CALx) and general access circuit (CAGx) being controlled by a control circuit (CGMx) coupled to the main bus (MB).

3. An access point structure according to claim 1 or 2, characterized in that the multiplexer (MX) includes in addition to the buffer memory (MTP) a write access circuit (CAE, Fig. 3), a parallel-to-series converter (P/S), a direct memory access circuit (CADM), a strobe memory (MF), a control circuit (PROT), a local bus (BMX) and a control circuit (CGMMX) for the main bus (MB) controlling the access circuit (CA), the buffer memory (MTP) being ordered in pages whose size is ajustable according to the size of the broadcast data packets.

4. An access point structure according to anyone of claims 1–3, characterized in that, in each coupler (Cx), the data received from the associated sources are formatted into data packets ready to be transmitted and stored into the dual access memory (MCx) wherein two buffers ($A_i$, $B_i$) are assigned to each data source, then the degree of filling of one buffer ($A_i$) is tested for changing it into the other one ($B_i$) when full, then the conditions of the buffers ($A_i$, $B_i$) are scanned in a predetermined order and, according to the scanning result and the priority levels, an output buffer (C) is informed of the address of the buffer ($A_i$ or $B_i$) storing the data packet to be transferred and is set in the waiting condition.

5. An access point structure according to anyone of claims 1–4, characterized in that the central unit (MPC) scans the conditions of the output buffers (C) of the couplers (Cx) and, if an output buffer (C) in the waiting condition is detected and the multiplexer (MX) has completed a previous exchange and is being in the condition of accepting a data packet, transmits to the circuit (CADM) of the multiplexer (MX) the coordinates of the coupler (Cx) and of the address read out of the waiting buffer (C) in this coupler, and the order for achieving the transfer of the buffer ($B_i$ or $A_i$) corresponding to this address into the memory (MTP).

FIG.1

FIG. 2

FIG. 3

FIG. 4

FIG.5

# FIG.6

# FIG. 7

Contextes généraux

| Contexte 1 | | | Contexte 8 |
|---|---|---|---|

Contexte central

| MPC |
|---|
| MX |
| MOD |

| CONTEXTE CENTRAL |
|---|
| CONTEXTE LOCAL 1 |
| CONTEXTE LOCAL 2 |
| |
| CONTEXTE LOCAL N |

| CONTEXTE COUPLEUR |
|---|
| CONTEXTE VOIE |

| COUPLEUR |
|---|

Contexte local

Contexte actif

# FIG. 8

| | |
|---|---|
| Longueur totalité du contexte | 2 octets |
| Nombre de coupleurs présents | 1 octet |
| Adresses des contextes des coupleurs | 8 X 2 octets |
| Longueur des paquets | 1 octet |
| CONTEXTE DES VOIES | 64 octets (2 X 32) |
| ZONE RESERVEE AUX OPTIONS | 128 octets |

zone standard

zone optionnelle

31

# FIG. 9

CONTEXTE LOCAL

| |
|---|
| CONTEXTE COUPLEUR |
| CONTEXTE VOIE |

CONTEXTE COUPLEUR

| | |
|---|---|
| Longueur du contexte | 2 octets |
| Numéro coupleur | 1 octet |
| Type coupleur | 1 octet |
| Etat coupleur | 1 octet |
| Zone réservée aux options | 8 octets |

CONTEXTE VOIE

| | |
|---|---|
| Nombre de voies N | 1 octet |
| Table des états des voies | N X 1 octet |
| Table des mots de synchro - octet - | N X 1 octet |
| Table des débits | N X 1 octet |
| Table des formats max | N X 1 octet |
| Table des identifica- teurs de voie | N X 2 octets |
| Réservé aux options | 8 octets |

0 106 714

# FIG. 10

TABLE DE DIALOGUE

| | |
|---|---|
| Mot de commande | 1 octet |
| Compte-rendu de commande | 1 octet |
| Etat de fonctionnement du coupleur | 1 octet |
| Zone des paramètres de la commande | 8 octets |
| Adresse de la table d'état des buffers de sortie | 2 octets (mode de transfert) |
| Adresse de l'image du contexte local | 2 octets (mode commande) |

LISTE DES COMPTE-RENDUS DE COMMANDE

00 H .................................. commande acceptée
01 H .................................. commande inconnue
02 H .................................. commande ignorée
03 H .................................. paramètres incorrects
04 à 07 H ............................. réservé
08 H à 07 FH ......................... spécial suivant option

35

# FIG. 11

| PROCESSEUR LOCAL | MPC | OPERATEUR |
|---|---|---|

Zone de dialogue

Lecture de la commande

Ecriture du compte-rendu

Eventuellement prise en compte des paramètres

| Mot de commande |
|---|
| compte-rendu |
| zone des paramètres |
| adresse contexte local |

Codage de la commande

Test de prise en compte

Eventuellement écriture des paramètres

choix de la commande

réception d'un message d'exécution

Prise en compte du nouveau contexte

IMAGE DU CONTEXTE

LOCAL

Modification du contexte local

0 106 714

0 106 714

# FIG. 12

COUPLEUR                                    PROCESSEUR CENTRAL

LIBRE                    Fin d'expédition          OCCUPE
                                                   SORTIE
                         FIN ADM                   VIDE

Prise du Buffer
par un accès

OCCUPE
ENTREE                                    Envoi vers le multiplexeur
VIDE                                         (lancement ADM)

Buffer prêt à
être expédié

OCCUPE                                             OCCUPE
ENTREE                                             SORTIE
PLEIN                                              PLEIN
                    Prise en charge par
                    le processeur central

39

# FIG.13

Adresse de la table d'états des buffers

| | |
|---|---|
| ETAT DU BUFFER | 1 octet |
| ADRESSE DU BUFFER | 2 octets |
| CHAINAGE | 2 octets |

1er buffer

| |
|---|
| ETAT DU BUFFER |
| ADRESSE DU BUFFER |
| CHAINAGE |

dernier buffer

Nombre minimum de buffers : 2

détail de l'état du buffer

| 2 | 1 | 0 |
|---|---|---|

0: Entrée     1 : sortie
0; vide     1 : plein
0: libre     1 : occupé

| 7 | 6 | 5 | 4 | |
|---|---|---|---|---|

Numéro de page (de 0 à 15)

# FIG. 14

# FIG. 15

Flowchart:

- **XTES** (start)
- **Armement de i ?**
  - NON → (branche vers la gauche)
  - OUI ↓
- **trigger i ?**
  - NON → (branche vers la gauche)
  - OUI ↓
- **Raz trigger / Raz flag / Raz tempo courante**
- **Tempo arrivée ?**
  - NON → (branche vers la gauche)
  - OUI ↓
- **Flag tempo = 1 / Désarmement**
- **Passage à la tempo suivante ($i \rightarrow i + 1$)**
- **FIN**

# FIG.16

sched. sync.

OSCR

OBPRE vide ?

NON

OUI

OBLEC1 OEP ?

NON

OUI

(OBLEC1) ⟶ (OBPRE)
OBPRE ⟶ OSP
OBLEC1 ⟶ OSP

OBLEC1 + 1

FIN

47

# FIG. 17

ODMA

OBSOR = vide?

OUI

NON

Mémoire MXT non pleine?

NON

OUI

OBPRE = OSP?

NON

OUI

Positionnement du voyant "SATUR" et armement tempo n° 2

(OBPRE)⟶(OBSOR)
OBSOR ⟶ OSP
OBPRE ⟶ VIDE

LANCEMENT DE L'ADM

FIN

# FIG.18

$Z$

( .OFDMA )

OBSOR = VIDE

BUFFER COUPLEUR
=
LIBRE

( FIN )

# FIG. 19

```
                    ( SEXP )
                       |
          NON         / \
       <--------( Un paquet )
                ( expédié ? )
                       |
                      OUi
                       |
          +-------------------------+
          | · Recherche de xyz dans |
          |   le buffer coupleur    |
          | · Recherche indice      |
          |     voie                |
          +-------------------------+
                       |
          +-------------------------+
          | bo de SSU.RV(i) = 1     |
          | SNI (i) + 1             |
          | SNTOT   + 1             |
          +-------------------------+
                       |
                       v
          NON         / \
       <--------( Tempo de )
                ( surveillance? )
                       |
                      OUi
                       |
          +-------------------------+
          | SNI  -----> SNIV        |
          | SNTOT----> SNTOTV       |
          | SN PA----> SNPAV        |
          | Posit. de B de SSURV    |
          +-------------------------+
                       |
          +-------------------------+
          | · RAZ   SNI, SNPA,      |
          |          SNTOT          |
          | · Armement tempo        |
          +-------------------------+
                       |
                    ( FIN )
```

# FIG.20

```
                    ( SSOR )
                       │
                      ╱ ╲
                     ╱   ╲
                    ╱Tempo ╲
                   ╱ de      ╲
                  ╱ sortie    ╲
                  ╲ voyants   ╱
                   ╲arrivée ? ╱
                    ╲       ╱
                     ╲     ╱
                       │
                  ┌────────────────┐
                  │ . Lecture table de │
                  │   surveillance     │
                  │ . sortie voyants de│
                  │   voie             │
                  └────────────────┘
                       │
                      ╱ ╲
                     ╱   ╲
                    ╱ Tempo╲
                   ╱ "RUN"  ╲
                   ╲arrivée ?╱
                    ╲       ╱
                     ╲     ╱
                       │
                  ┌────────────────┐
                  │ . inversion voyant│
                  │   RUN             │
                  │ . armement tempo  │
                  └────────────────┘
                       │
                      ╱ ╲
                     ╱   ╲
                    ╱Tempo ╲
                   ╱ SATUR  ╲
                   ╲arrivée ?╱
                    ╲       ╱
                     ╲     ╱
                       │
                  ┌────────────────┐
                  │ . RAZ voyant SATUR│
                  └────────────────┘
                       │
                  ┌────────────────────┐
                  │ SORTIE DES VOYANTS │
                  │ GENERAUX           │
                  │ Armement tempo de  │
                  │ sortie voyants     │
                  └────────────────────┘
                       │
                    ( FIN )
```

# FIG.21

Horloge

Reset

CHOR

INITIALISATION

SORTIE

T M P

Expédition des
paquets

Régulation des
flux

IT d'accès

ACCES

Exploration des
8 accès

C O M

gestion des commandes

# FIG.22

**Etats buffers A, B**

|  | B1 |
|---|---|
|  | A1 |
|  |  |
|  | B8 |
|  | A8 |

16 octets  AETABU

**Adresses buffers**

|  | B1 |
|---|---|
|  | A1 |
|  |  |
|  | B8 |
|  | A8 |

32 octets  ADRBUF

**Etat buffer c**

| ETAT C |
|---|
| Adresse C |
| Chaînage |

B SE TAC

**Pointeurs de blocs**

|  | A1 |
|---|---|
|  | Ai |
|  | A8 |

16 octets  APTBLC

**Formats courants**

| Format de A1 |
|---|
| Format max de A1 |
|  |
| Format de A8 |
| Format max de A8 |

16 octets  AFORMA

**Indices courants**

|  | A1 |
|---|---|
|  |  |
|  | A8 |

8 octets  SINDIS

**timings min**

| Accès 1 |
|---|
|  |
| Accès 8 |

16 octets  TMIN

**timings max**

| Accès 1 |
|---|
|  |
| Accès 8 |

16 octets  TMAX

**Etats des voies**

S voi

1 : active
0 : non active

**Flags des paquets expédiés**

S FLAG

1 : un paquet vient d'être
    expédié sur cette voie

STAT

Adresse status du dernier
paquet expédié

59

# FIG. 23

Reset

CINI

Commande 01 ?

01

- init interruptions
- init table de dialogue
- init variables diverses
- init périphériques

Acquittement de
commande 01

NON  commande 02 ?

OUI

Lancement de
commande 02

Activation des IT

POLL

# FIG. 24

horloge

CHOR

Sauvegarde du masque des IT d'accès

MASQUAGE JPI

SORTIE

TMP

Démasquage JPI

FIN

# FIG. 25

POLL

Réception
d'une commande?

NON

OUI

commande 01 ?

OUI → INITIALISATION

NON

Lancement de la
commande

# FIG.26

```
                                    ( 02 )
                                       |
    ┌──────────────────────────────────────────┐
    │  . Positionnement des starts              │
    │  . Positionnement des xyz                 │
    │  . tmin, tmax, status                     │
    │  . calcul des Formats max                 │
    │  . positionnement état coupleur           │
    │  . activation des IT des voies en         │
    │    service                                │
    │                                           │
    │                                           │
    └──────────────────────────────────────────┘
                       |
                   (  FIN  )
```

```
   ( 03 )              ( 04 )                    ( 20 )
      |      hors service │ en service              |
  ┌─────────┐          ◇                      ┌──────────────┐
  │calcul des for-│                           │bit status priori,│
  │mats max │      ┌──────────┴───────┐        │IT des voies  │
  └─────────┘      │                  │        └──────────────┘
      |       ┌─────────┐       ┌─────────┐        |
              │inhib IT │       │activ IT │
              └─────────┘       └─────────┘
                   └──────────────┘
                          |

   ( 21 )              ( 22 )                    ( 23 )
      |                   |                         |
  ┌──────────────┐   ┌──────────────┐       ┌──────────────┐
  │Positionnement│   │Positionnement│       │$t_{min}$ $A_iB_i$ │
  │  de xyz      │   │  des starts  │       │$t_{max}$ $A_iB_i$ │
  └──────────────┘   └──────────────┘       └──────────────┘
      |                   |                         |
                      ( Autre )
                          |
                     ┌─────────┐
                     │  RIEN   │
                     └─────────┘
                          |
```

# FIG.27

It accès

ACCES

Lecture de
l'octet et
mise dans $A_i$

OUI — $A_i$ plein ? — NON

$B_i$ vide ? — OUI

NON

$A_i \longrightarrow B_i$
AFORMA = 0
APTBLC = 0
Status Bi = PLEIN
Status Ai = VIDE

Status $A_i$ = PARTIEL

MASQUAGE IT

FIN

# FIG. 28

| 6 | Code hexa | 5 | 4 | 3 | 2 | 1 | 0 | NIV 1 | NIV 2 |
|---|---|---|---|---|---|---|---|---|---|
| 0 | 20 | 1 | 0 | 0 | 0 | 0 | 0 | 0 | 0 |
| 0 | 21 | 1 | 0 | 0 | 0 | 0 | 1 |  | 0 |
| 0 | 22 | 1 | 0 | 0 | 0 | 1 | 0 | 0 | 1 |
| 0 | 23 | 1 | 0 | 0 | 0 | 1 | 1 | 1 | 0 |
| 0 | 26 | 1 | 0 | 0 | 1 | 1 | 0 | 0 | 1 |
| 0 | 27 | 1 | 0 | 0 | 1 | 1 | 1 | 1 | 0 |
| 0 | 10 | 0 | 1 | 0 | 0 | 0 | 0 | 0 | 0 |
| 0 | 11 | 0 | 1 | 0 | 0 | 0 | 1 | 0 | 0 |
| 0 | 12 | 0 | 1 | 0 | 0 | 1 | 0 | 0 | 0 |
| 0 | 13 | 0 | 1 | 0 | 0 | 1 | 1 | 1 | 0 |
| 0 | 16 | 0 | 1 | 0 | 1 | 1 | 0 | 0 | 1 |
| 0 | 17 | 0 | 1 | 0 | 1 | 1 | 1 | 1 | 0 |
| 0 | 08 | 0 | 0 | 1 | 0 | 0 | 0 | 0 | 0 |
| 0 | 09 | 0 | 0 | 1 | 0 | 0 | 1 | 0 | 0 |
| 0 | 0A | 0 | 0 | 1 | 0 | 1 | 0 | 0 | 0 |
| 0 | 0B | 0 | 0 | 1 | 0 | 1 | 1 | 0 | 0 |
| 0 | 0E | 0 | 0 | 1 | 1 | 1 | 0 | 0 | 0 |
| 0 | 0F | 0 | 0 | 1 | 1 | 1 | 1 | 0 | 0 |
| 1 | IDEM POUR TYPE B | | | | | | | | |

# FIG. 29

TYPE A

TYPE B

NON

Format ∈ liste ?

```
. mise à jour indice
. mise à jour Format
. activation accès
.
```

```
Aι ———————➤ Bι
. Status Aι = VIDE
. Status Bι = PLEIN
```

```
. mise à jour indice
. mise à jour Format
```

```
Init Format courant
Init pointeur bloc
```

```
Status C = EPOA

Flag d'exp = 1
mémorisation adresse
buffer en cours d'exp.
```

OCCUPE
ENTREE
PLEIN

FIN

# FIG.30